(19)

**Europäisches Patentamt**
**European Patent Office**
**Office européen des brevets**

(11) **EP 4 356 069 B1**

(12) **FASCICULE DE BREVET EUROPEEN**

(45) Date de publication et mention
de la délivrance du brevet:
**29.01.2025 Bulletin 2025/05**

(21) Numéro de dépôt: **23719040.0**

(22) Date de dépôt: **27.03.2023**

(51) Classification Internationale des Brevets (IPC):
**G01C 11/02** *(2006.01)*     **B64G 1/10** *(2006.01)*
**B64G 1/24** *(2006.01)*     **G06V 20/13** *(2022.01)*
**B64G 3/00** *(2006.01)*

(52) Classification Coopérative des Brevets (CPC):
**G01C 11/02; B64G 1/1021; B64G 1/1085;
B64G 1/244; G06V 20/13;** B64G 3/00

(86) Numéro de dépôt international:
**PCT/FR2023/050428**

(87) Numéro de publication internationale:
**WO 2023/187283 (05.10.2023 Gazette 2023/40)**

(54) **PROCÉDÉ ET SYSTÈME D'ALLOCATION D'OBSERVATIONS DE LA TERRE À RÉALISER À UNE PLURALITÉ DE SATELLITES**

VERFAHREN UND SYSTEM ZUR ZUWEISUNG VON ERDBEOBACHTUNGEN AN MEHRERE SATELLITEN

METHOD AND SYSTEM FOR ALLOCATING EARTH OBSERVATIONS TO BE MADE TO A PLURALITY OF SATELLITES

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **28.03.2022 FR 2202757**

(43) Date de publication de la demande:
**24.04.2024 Bulletin 2024/17**

(73) Titulaire: **Airbus Defence and Space SAS
31402 Toulouse Cedex 4 (FR)**

(72) Inventeurs:
• **PICARD, Mathieu**
  **31402 Toulouse Cedex4 (FR)**
• **GUERRA, Jonathan**
  **31402 Toulouse Cedex 4 (FR)**

(74) Mandataire: **Plasseraud IP
104 Rue de Richelieu
CS92104
75080 Paris Cedex 02 (FR)**

(56) Documents cités:
• ZHIBO E ET AL: "Multi-satellites imaging scheduling using individual reconfiguration based integer coding genetic algorithm", ACTA ASTRONAUTICA, PERGAMON PRESS, ELMSFORD, GB, vol. 178, 30 September 2020 (2020-09-30), pages 645 - 657, XP086351837, ISSN: 0094-5765, [retrieved on 20200930], DOI: 10.1016/J.ACTAASTRO.2020.08.041
• MALLADI KRISHNA TEJA ET AL: "Clustered maximum weight clique problem: Algorithms and empirical analysis", COMPUTERS AND OPERATIONS RESEARCH, OXFORD, GB, vol. 85, 4 April 2017 (2017-04-04), pages 113 - 128, XP085017064, ISSN: 0305-0548, DOI: 10.1016/J.COR.2017.04.002
• ZHIBO E ET AL: "Multi-satellites imaging scheduling using individual reconfiguration based integer coding genetic algorithm", ACTA ASTRONAUTICA, PERGAMON PRESS, ELMSFORD, GB, vol. 178, 30 September 2020 (2020-09-30), pages 645 - 657, XP086351837, ISSN: 0094-5765, [retrieved on 20200930], DOI: 10.1016/J.ACTAASTRO.2020.08.041

**EP 4 356 069 B1**

- **MALLADI KRISHNA TEJA ET AL: "Clustered maximum weight clique problem: Algorithms and empirical analysis", COMPUTERS AND OPERATIONS RESEARCH, OXFORD, GB, vol. 85, 4 April 2017 (2017-04-04), pages 113 - 128, XP085017064, ISSN: 0305-0548, DOI: 10.1016/ J.COR.2017.04.002**

## Description

### Domaine technique

La présente invention appartient au domaine de l'imagerie terrestre par des satellites, et concerne plus particulièrement un procédé d'allocation de requêtes d'observations de la Terre à une pluralité de satellites, ainsi qu'un système pour la mise en œuvre d'un tel procédé d'allocation.

### Etat de la technique

De nos jours, de nombreux satellites d'observation survolent déjà la surface de la Terre et peuvent être programmés pour répondre aux requêtes d'observations de la Terre émises par des utilisateurs. Généralement, lors de la réception d'une requête d'observation d'une zone à la surface de la Terre, celle-ci est allouée au prochain satellite survolant ladite zone et vers lequel la requête d'observation peut-être relayée avant qu'il ne survole ladite zone. Si ce satellite n'est pas en mesure d'acquérir des images de cette zone (par exemple parce qu'il doit déjà acquérir d'autres images pour répondre à une autre requête d'observation, ou parce que les conditions météorologiques ne le permettent pas), alors la requête d'observation est allouée au satellite suivant pouvant réaliser les acquisitions correspondantes, etc.

La tendance actuelle est celle d'une augmentation du nombre de satellites d'observation en orbite terrestre, d'une augmentation du nombre de requêtes d'observations à traiter, et d'une diminution des délais souhaités pour récupérer les images des zones à observer.

Les méthodes conventionnelles d'allocation des observations, comme décrit par exemple dans le brevet EP3375111, peuvent s'avérer d'efficacité limitée lorsque le nombre de satellites et le nombre de requêtes d'observations à traiter devient trop important.

Zhibo, E., Shi, R., Gan, L., Baoyin, H. and Li, J., 2021. Multi-satellites imaging scheduling using individual reconfiguration based integer coding genetic algorithm. Acta Astronautica, 178, pp.645-657, divulgue un procédé selon le préambule de la revendication 1.

### Exposé de l'invention

La présente invention a pour objectif de remédier à tout ou partie des inconvénients de l'art antérieur, notamment ceux exposés ci-avant, en proposant une solution qui permette de réaliser de manière plus efficace l'allocation de nombreuses requêtes d'observations à réaliser à de nombreux satellites.

A cet effet, et selon un premier aspect, il est proposé un procédé d'allocation de requêtes d'observations de zones géographiques à réaliser à une pluralité de satellites, ledit procédé comportant des étapes de :

- décomposition de chaque zone géographique à observer en une ou plusieurs zones élémentaires à acquérir, chaque zone élémentaire étant adaptée à être acquise par un instrument d'observation d'un des satellites lors d'un survol de ladite zone géographique par ledit satellite,
- pour chaque zone élémentaire : détermination d'au moins une opportunité d'acquisition de ladite zone élémentaire correspondant au survol de cette zone élémentaire par au moins un des satellites, sur une fenêtre temporelle prédéterminée,
- allocation provisoire des zones élémentaires à la pluralité de satellites, en fonction des opportunités d'acquisition et en fonction d'un modèle préliminaire qui modélise de manière approximative les manœuvres d'attitude et les acquisitions de chaque satellite,
- pour chaque satellite : évaluation de faisabilité sur la fenêtre temporelle des acquisitions des zones élémentaires allouées de manière provisoire audit satellite en fonction d'un modèle opérationnel qui modélise de manière précise les manœuvres d'attitude et les acquisitions dudit satellite, et allocation définitive audit satellite de chaque zone élémentaire allouée de manière provisoire audit satellite et dont l'acquisition est validée selon le modèle opérationnel dudit satellite sur la fenêtre temporelle.

Ainsi, le procédé d'allocation permet tout d'abord à une même zone géographique à observer d'être décomposée en plusieurs zones élémentaires pouvant être acquises par des satellites différents, de sorte que plusieurs satellites peuvent être utilisés pour répondre à une même requête d'observation.

Pour chaque zone élémentaire, on détermine les opportunités d'acquisition par les différents satellites sur une fenêtre temporelle prédéterminée, par exemple de l'ordre de 24 heures ou 48 heures. Chaque satellite qui, au cours de cette fenêtre temporelle, se retrouvera en situation de réaliser l'acquisition d'une zone élémentaire représente donc pour cette zone élémentaire une opportunité d'acquisition comportant par exemple un instant de début (instant le plus tôt auquel l'acquisition peut débuter) et un instant de fin (instant le plus tardif auquel l'acquisition peut se terminer).

En outre, pour planifier les acquisitions des zones élémentaires par les différents satellites, les manœuvres d'attitude et les acquisitions des satellites sont modélisées avec deux niveaux de précision distincts. Un premier modèle, dit préliminaire, modélise les manœuvres d'attitude et les acquisitions d'un satellite de manière approximative. Un second modèle, dit opérationnel, modélise les manœuvres d'attitude et les acquisitions d'un satellite de manière précise. Il est à noter que les termes « approximatif » et « précis » sont ici des termes ayant un sens relatif l'un par rapport à l'autre, et signifient simplement que le modèle préliminaire modélise le comportement du satellite de manière moins fine que le modèle opérationnel, et inversement. Le modèle préliminaire permet donc d'évaluer de manière approximative la charge d'un satellite, avec une complexité de calcul moindre que le modèle opérationnel, qui permet toutefois d'évaluer la charge dudit satellite de manière beaucoup plus précise, en tenant compte de davantage de contraintes opérationnelles, notamment du temps réel nécessaire pour effectuer une manœuvre d'attitude entre deux acquisitions successives, du temps réel nécessaire pour réaliser l'acquisition de la zone élémentaire considérée, etc.

L'allocation des différentes zones élémentaires aux satellites se fait alors en deux phases principales.

Les zones élémentaires sont tout d'abord toutes allouées de manière provisoire aux différents satellites, en tenant compte notamment des opportunités d'acquisition et du modèle préliminaire de chaque satellite. Toutefois, l'utilisation du modèle préliminaire ne permet pas d'assurer que des zones élémentaires allouées de manière provisoire à un satellite pourront effectivement être toutes acquises par ce satellite, les contraintes opérationnelles liées aux manœuvres d'attitude et aux acquisitions, notamment, n'étant modélisées que de manière approximative par ledit modèle préliminaire. Toutefois, la complexité de calcul requise par le modèle préliminaire est bien moindre que celle du modèle opérationnel, ce qui permet de réaliser une allocation de manière globale de toutes les zones élémentaires à tous les satellites de manière efficace. L'allocation provisoire est donc effectuée de manière globale pour tous les satellites, par exemple de manière centralisée.

Après que toutes les zones élémentaires ont été allouées de manière provisoire, celles-ci sont ensuite allouées de manière définitive aux satellites, au cours d'une phase qui s'appuie sur le modèle opérationnel pour vérifier que les acquisitions des zones élémentaires allouées de manière provisoire à un satellite sont effectivement réalisables par ce satellite. En pratique, le modèle opérationnel permet de déterminer la séquence exacte de tâches à exécuter par les ressources (instrument d'observation, moyens de manœuvre, etc.) du satellite pour réaliser l'acquisition de zones élémentaires prédéterminées. Cette séquence de tâches est ensuite convertie en séquence de télécommandes datées destinées à différents sous-systèmes (ressources), qui seront transmises au satellite 30 et exécutées à terme à bord. Par exemple, le modèle opérationnel permet de déterminer et de prendre en compte la date exacte et l'attitude exacte du satellite au moment où chaque acquisition doit être réalisée, ainsi que les contraintes opérationnelles liées notamment aux manœuvres d'attitude nécessaires pour passer d'une première attitude d'acquisition d'une première zone élémentaire à une seconde attitude d'acquisition d'une seconde zone élémentaire, etc. L'allocation définitive est donc réalisée individuellement pour chaque satellite (contrairement à l'allocation provisoire qui est globale pour tous les satellites), par exemple de manière décentralisée au niveau de chaque opérateur de satellite. Pour chaque satellite, le modèle opérationnel associé est donc mis en œuvre pour évaluer la faisabilité sur la fenêtre temporelle des acquisitions des zones élémentaires allouées de manière provisoire à ce satellite. Si l'acquisition d'une zone élémentaire allouée de manière provisoire à un satellite n'est pas validée par le modèle opérationnel de ce satellite, ladite zone élémentaire peut par exemple être à nouveau allouée de manière provisoire au cours d'une phase d'allocation provisoire ultérieure. Le cas échéant, au cours de cette phase d'allocation provisoire ultérieure, la zone élémentaire dont l'acquisition n'a pas été validée précédemment est réallouée de manière provisoire en même temps que de nouvelles zones élémentaires à acquérir obtenues par décomposition de nouvelles requêtes d'observation.

Pour ce qui concerne l'allocation, le modèle opérationnel n'est donc utilisé pour chaque satellite que pour valider *in fine* que ledit satellite peut effectivement, en pratique, réaliser les acquisitions de toutes les zones élémentaires qui lui ont été allouées de manière provisoire, là où le modèle préliminaire est utilisé beaucoup plus souvent, à chaque fois qu'il est envisagé d'allouer de manière provisoire une zone élémentaire, parmi toutes les zones élémentaires à allouer, à chaque satellite. Les appels au modèle opérationnel sont donc beaucoup moins fréquents que les appels au modèle préliminaire, de sorte que la complexité de calcul associée à l'utilisation du modèle opérationnel reste limitée.

Dans des modes particuliers de mise en œuvre, le procédé d'allocation peut comporter en outre, de manière optionnelle, l'une ou plusieurs des caractéristiques suivantes, prises isolément ou selon toutes les combinaisons techniquement possibles.

Dans des modes particuliers de mise en œuvre :

- l'étape d'allocation provisoire est réalisée par au moins un serveur d'allocation provisoire n'ayant pas accès aux modèles opérationnels de tous les satellites, l'au moins un serveur d'allocation provisoire réalisant une allocation globale des zones élémentaires aux satellites,
- pour au moins un satellite : l'étape d'évaluation de faisabilité et l'étape d'allocation définitive sont réalisées par un serveur d'allocation définitive, distinct de l'au moins un serveur d'allocation provisoire, ayant accès au modèle opérationnel dudit au moins satellite.

Dans des modes particuliers de mise en œuvre, l'au moins un serveur d'allocation provisoire n'a accès à aucun modèle opérationnel de satellite.

Dans des modes particuliers de mise en œuvre, plusieurs serveurs d'allocation définitive sont mis en œuvre, chaque serveur d'allocation définitive ayant accès aux modèles opérationnels d'une partie seulement des satellites.

Dans des modes particuliers de mise en œuvre, les zones élémentaires à allouer sont mémorisées dans une base de données et, après l'allocation provisoire de chaque zone élémentaire, lorsque l'acquisition d'une zone élémentaire allouée de manière provisoire à un satellite n'est pas validée selon le modèle opérationnel dudit satellite, sur la fenêtre temporelle, ladite zone élémentaire est maintenue dans la base de données en tant que zone élémentaire non allouée. Lorsque l'acquisition d'une zone élémentaire allouée de manière provisoire est validée selon le modèle opérationnel dudit satellite, celle-ci peut être supprimée de la base de données, ou bien maintenue dans la base de données en tant que zone élémentaire allouée.

Ainsi, s'il s'avère que l'acquisition d'une zone élémentaire allouée de manière provisoire à un satellite n'est pas réalisable par celui-ci, alors elle est maintenue parmi les zones élémentaires restant à allouer, dans la base de données correspondante. Ainsi, cette zone élémentaire pourra être allouée ultérieurement à l'un des satellites, lors d'une exécution ultérieure des phases d'allocation provisoire et finale, pour la même fenêtre temporelle ou une fenêtre temporelle suivante, etc.

Dans des modes particuliers de mise en œuvre, les satellites appartiennent à une même constellation et une empreinte au sol de l'instrument d'observation est de même forme et de même dimensions pour chaque satellite de la constellation.

Dans des modes particuliers de mise en œuvre, les satellites appartiennent à au moins deux constellations différentes, une empreinte au sol de l'instrument d'observation est de même forme et de même dimensions pour chaque satellite d'une même constellation, les empreintes au sol d'instruments d'observation étant de formes et/ou de dimensions différentes pour des satellites de constellations différentes.

Dans des modes particuliers de mise en œuvre, les zones élémentaires d'une même observation à réaliser sont allouées à des satellites d'une même constellation.

Dans des modes particuliers de mise en œuvre, le modèle préliminaire modélise le comportement d'un satellite en fonction de durées prédéfinies de manœuvre d'attitude et/ou d'acquisition.

Dans des modes particuliers de mise en œuvre, le modèle préliminaire modélise le comportement d'un satellite en fonction de l'une au moins parmi :

- une durée prédéfinie de manœuvre d'attitude du satellite, indépendante de la manœuvre d'attitude à réaliser pour réaliser l'acquisition, et/ou
- une durée prédéfinie d'acquisition de l'instrument d'observation du satellite, indépendante de l'acquisition à réaliser,
- une durée prédéfinie d'acquisition de l'instrument d'observation par unité de surface,
- une marge temporelle prédéfinie qui dépend d'une priorité de la requête de l'observation associée à la zone élémentaire.

Dans des modes particuliers de mise en œuvre :

- le modèle préliminaire est utilisé pour estimer pour chaque satellite un plan de charge de ressources dudit satellite sur la fenêtre temporelle, et
- l'allocation provisoire d'une zone élémentaire à un satellite disposant d'une opportunité d'acquisition de ladite zone élémentaire comporte le fait de déterminer, en fonction du modèle préliminaire et en fonction des zones élémentaires déjà allouées de manière provisoire audit satellite, si ladite zone élémentaire à allouer peut être allouée de manière provisoire audit satellite compte tenu du plan de charge estimé dudit satellite sur la fenêtre temporelle.

Dans des modes particuliers de mise en œuvre, l'allocation provisoire comporte, après détermination de l'ensemble des opportunités d'acquisition pour l'ensemble des zones élémentaires :

- un ordonnancement des zones élémentaires à allouer en fonction d'au moins un paramètre d'ordonnancement prédéterminé et,
- un traitement successif des zones élémentaires selon l'ordre d'ordonnancement et, pour chaque zone élémentaire traitée : un classement des opportunités d'acquisition en fonction d'au moins un paramètre de classement prédéterminé et une attribution de la zone élémentaire à un satellite en fonction de l'ordre de classement des opportunités d'acquisition et du modèle préliminaire.

Dans des modes particuliers de mise en œuvre, l'au moins un paramètre d'ordonnancement des zones élémentaires est au moins l'un parmi les paramètres suivants :

- une priorité de la requête de l'observation associée à ladite zone élémentaire,
- des conditions météorologiques prévues pour la fenêtre temporelle dans la zone élémentaire,
- des conditions météorologiques requises pour l'acquisition de la zone élémentaire,
- une surface utile de la zone élémentaire,
- une date de péremption d'une requête de l'observation associée à ladite zone élémentaire,
- une date de réception d'une requête de l'observation associée à ladite zone élémentaire,
- une fréquence ou un nombre d'acquisitions de la zone géographique de la requête d'observation.

Dans des modes particuliers de mise en œuvre, l'au moins un paramètre de classement des opportunités d'acquisition est au moins l'un parmi les paramètres suivants :

- des conditions météorologiques prévues pour l'opportunité d'acquisition,
- une date de début de l'opportunité d'acquisition,
- une date de récupération d'une image acquise au cours de l'opportunité d'acquisition,
- un paramètre de pointage du satellite lors de l'opportunité d'acquisition,
- un nombre d'autres opportunités d'acquisition vers d'autres zones élémentaires.

Dans des modes particuliers de mise en œuvre, les zones élémentaires allouées de manière définitive à un satellite correspondent à un ensemble de zones élémentaires, parmi les zones élémentaires allouées de manière provisoire audit satellite, pour lesquelles il est possible de calculer, en fonction du modèle opérationnel, un plan de travail exécutable par ledit satellite et permettant de réaliser l'acquisition de toutes les zones élémentaires de l'ensemble lorsque ledit plan de travail est exécuté par ledit satellite.

Le procédé d'allocation proposé permet d'optimiser l'allocation de requêtes d'observations. Par exemple, lorsque le nombre de satellites est important, plusieurs satellites pouvant survoler une même zone géographique à observer sur un laps de temps court, le procédé d'allocation permet de répondre de manière globale à un grand nombre de requêtes d'observations en faisant par exemple réaliser les acquisitions de cette zone géographique par un autre satellite que le premier la survolant. L'allocation peut ainsi gagner ainsi en efficacité grâce à une prise en compte de la dimension constellation de satellites par rapport à une solution selon l'art antérieur dans laquelle chaque satellite choisit séquentiellement ses acquisitions selon l'ordre de survol.

Avantageusement, le procédé d'allocation proposé n'applique pas directement les algorithmes de planification opérationnels (modèle opérationnel), généralement complexes, à l'échelle d'une constellation importante de satellites, ce qui induirait une complexité de calcul associée trop importante. Le procédé d'allocation proposé permet ainsi une exécution limitée et optimisée de ces algorithmes de planification opérationnels.

Un autre avantage du procédé d'allocation proposé est qu'il permet d'adresser simultanément plusieurs constellations de satellites pour un même ensemble de requêtes d'observations.

Un autre avantage du procédé d'allocation est qu'il permet un temps de traitement plus réduit de chaque requête d'observation et donc un traitement d'un nombre plus important de requêtes d'observations sur une durée donnée.

Selon un deuxième aspect, il est proposé un produit programme d'ordinateur comportant un ensemble d'instructions de code de programme qui, lorsqu'elles sont exécutées par au moins un processeur, configurent ledit au moins un processeur pour mettre en œuvre un procédé d'allocation selon l'un quelconque des modes de mise en œuvre de la présente divulgation.

Selon un troisième aspect, il est proposé un système d'allocation de requêtes d'observations de zones géographiques à réaliser à une pluralité de satellites, chaque satellite comportant un instrument d'observation, ledit système allocation comportant des moyens configurés pour mettre en œuvre un procédé d'allocation selon l'un quelconque des modes de mise en œuvre de la présente divulgation.

Dans des modes particuliers de réalisation, le système d'allocation peut comporter en outre, de manière optionnelle, l'une ou plusieurs des caractéristiques suivantes, prises isolément ou selon toutes les combinaisons techniquement possibles.

Dans des modes particuliers de réalisation, le système d'allocation comporte :

- au moins un serveur d'allocation provisoire configuré pour allouer de manière provisoire les zones élémentaires à acquérir, et
- au moins un serveur d'allocation définitive, distinct de l'au moins un serveur d'allocation provisoire, configuré pour allouer de manière définitive les zones élémentaires à acquérir.

Dans des modes particuliers de réalisation, l'au moins serveur d'allocation provisoire n'a pas accès aux modèles opérationnels de tous les satellites.

Selon un quatrième aspect, il est proposé un système d'acquisition d'images de la Terre par une pluralité de satellites, comportant :

- un système d'allocation selon l'un quelconque des modes de réalisation de la présente divulgation,
- des moyens de transmission de plans de travail aux satellites, le plan de travail d'un satellite permettant de configurer ledit satellite pour réaliser les acquisitions des zones élémentaires allouées de manière définitive audit satellite,
- des moyens de réception d'images, acquises par les satellites, représentant les zones élémentaires.

**Présentation des figures**

L'invention sera mieux comprise à la lecture de la description suivante, donnée à titre d'exemple nullement limitatif, et faite en se référant aux figures qui représentent :

- Figure 1 : un diagramme représentant un exemple de mise en œuvre d'un procédé d'allocation de requêtes d'observations,
- Figure 2 : un exemple de zone géographique décomposée en zones élémentaires de satellites de constellations différentes,
- Figure 3 : une représentation schématique d'un satellite en orbite défilante réalisant l'acquisition de zones élémentaires de zones géographiques de requêtes d'observations différentes,
- Figure 4 : un diagramme représentant un exemple de mise en œuvre d'une allocation provisoire de zones élémentaires,
- Figure 5 : une représentation du déroulement des différentes étapes de l'allocation provisoire de la figure 4,
- Figure 6 : une représentation schématique d'un exemple de réalisation d'un système d'allocation de requêtes d'observation,
- Figure 7 : une représentation schématique d'un autre exemple de réalisation d'un système d'allocation de requêtes d'observation.

Dans ces figures, des références identiques d'une figure à une autre désignent des éléments identiques ou analogues. Pour des raisons de clarté, les éléments représentés ne sont pas à l'échelle, sauf mention contraire.

**Description des modes de réalisation**

Tel qu'indiqué ci-dessus, la présente invention concerne un procédé 10 d'allocation de requêtes d'observations de zones géographiques à réaliser à une pluralité de satellites 30. Une requête d'observation correspond typiquement à la description d'une zone géographique pour laquelle un utilisateur souhaite obtenir une ou plusieurs images acquises par satellite.

Dans le cas présent, plusieurs satellites 30 peuvent être utilisés pour répondre aux requêtes d'observations. Ces satellites 30 sont placés en orbite autour de la Terre. Différentes orbites peuvent être considérées dans la présente invention, comme des orbites géosynchrones, des orbites basses (« Low Earth Orbit » ou LEO), des orbites moyennes (« Medium Earth Orbit » ou MEO), etc. De préférence, tout ou partie des satellites 30 sont placés sur des orbites défilantes, c'est-à-dire des orbites non géostationnaires. De préférence, tous les satellites 30 pouvant être utilisés pour répondre aux requêtes d'observations sont en orbite LEO. Les satellites 30 peuvent appartenir à une même constellation ou à des constellations différentes. Une constellation est composée de satellites 30 présentant des caractéristiques similaires en termes d'instrument d'observation (type d'observation passive ou active, bande(s) de longueurs d'ondes, etc.) et en termes d'orbite (altitude, inclinaison, etc.).

Suivant les modes de réalisation, les instruments d'observation des satellites 30 peuvent :

- être passifs ou actifs (par exemple radar à synthèse d'ouverture),
- réaliser des acquisitions dans différentes longueurs d'ondes (visibles et/ou infrarouge, etc.),
- présenter des champs de vision différents (et donc des empreintes au sol différentes),
- utiliser des modes d'acquisition différents, par exemple de type « push-broom », « push frame », « time-delay integration » ou TDI, « step and stare » (voir demande de brevet FR 3107953 A1), etc.

Les instruments d'observation de satellites 30 d'une même constellation présentent des caractéristiques similaires (même type d'observation, même mode d'acquisition, même(s) longueur(s) d'ondes d'acquisition, même champ de vision, etc.). En outre, les orbites des satellites 30 d'une même constellation présentent des caractéristiques similaires (même altitude, même inclinaison, etc.).

L'empreinte au sol d'un instrument d'observation correspond à l'intersection instantanée du champ de vision dudit instrument d'observation avec la surface terrestre en considérant un pointage Nadir dudit instrument d'observation.

Dans le cas d'une orbite elliptique, l'empreinte au sol correspond par exemple à l'intersection instantanée du champ de vision avec la surface terrestre lorsque le satellite 30 se trouve au périgée de l'orbite. Dans la suite de la description, on se place de manière non limitative dans le cas où tous les satellites 30 sont sur des orbites circulaires. L'empreinte au sol de l'instrument d'observation d'un satellite 30 dépend donc principalement du champ de vision dudit instrument d'observation et de l'altitude de l'orbite dudit satellite 30. Par conséquent, l'empreinte au sol est sensiblement de même forme et de mêmes dimensions pour tous les satellites 30 d'une même constellation. A contrario, les caractéristiques des instruments d'observation et/ou des orbites variant d'une constellation à une autre, les empreintes au sol des instruments d'observation sont de formes et/ou de dimensions différentes pour des satellites 30 de constellations différentes.

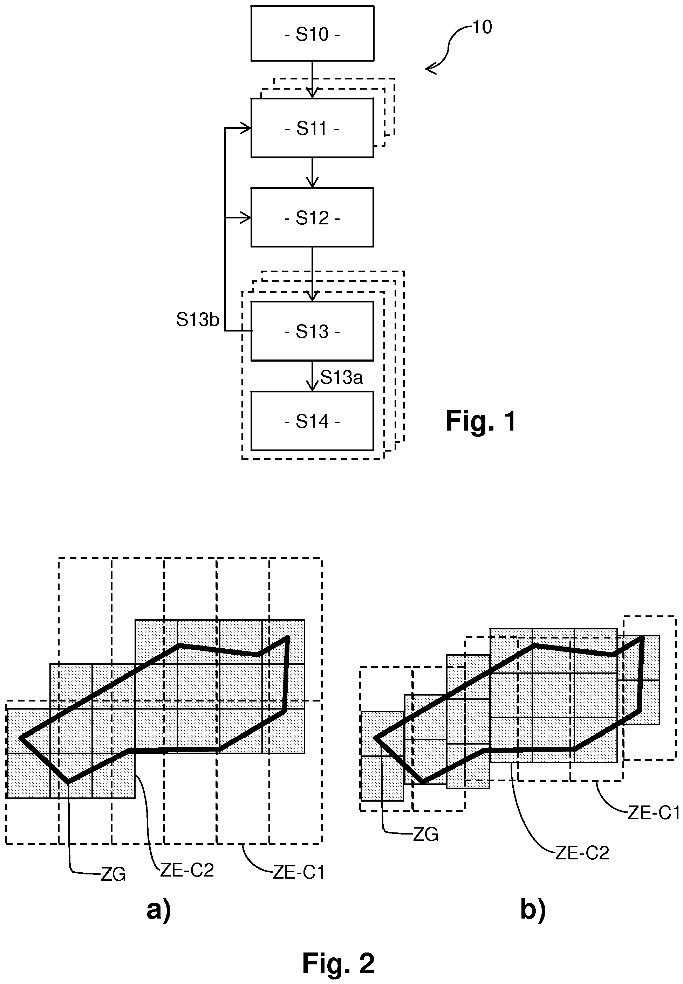

La figure 1 représente schématiquement les principales étapes d'un procédé 10 d'allocation de requêtes d'observations de zones géographiques à une pluralité de satellites 30, pouvant appartenir à une seule ou plusieurs constellations différentes.

Tel qu'indiqué ci-dessus, une requête d'observation correspond typiquement à la description d'une zone géographique pour laquelle un utilisateur souhaite obtenir une ou plusieurs images acquises par satellite. Une requête d'observation peut également comporter une ou plusieurs métadonnées, fournies par l'utilisateur et/ou ajoutées à la requête d'observation lors de sa réception. Par exemple, des exemples non-limitatifs de métadonnées pouvant être associées à une requête d'observation comportent :

- une priorité de la requête de l'observation,
- un type d'observation à réaliser (passive / optique ou active / radar),
- une ou plusieurs longueurs d'ondes à utiliser pour l'acquisition (par exemple longueurs d'ondes visibles ou infrarouge),
- des conditions météorologiques requises pour l'acquisition de la zone géographique,
- une résolution spatiale requise pour les images,
- une date de réception de la requête d'observation,
- une date de péremption de la requête d'observation,
- une fréquence ou un nombre d'acquisitions de la zone géographique, dans le cas d'une requête d'observation visant à acquérir plusieurs fois la même zone géographique, etc.

Tel qu'illustré par la figure 1, le procédé 10 d'allocation comporte, pour chaque requête d'observation reçue, une étape S10 de décomposition de la zone géographique à observer en une ou plusieurs zones élémentaires à acquérir. En pratique, une zone élémentaire correspond à une surface au sol pouvant être acquise par un satellite 30 lors d'un unique survol de la zone géographique par ledit satellite 30. Suivant la forme et/ou les dimensions de la zone géographique à imager, il peut en effet s'avérer impossible d'acquérir la totalité de la zone géographique par un même satellite sur une seule période orbitale. On comprend en outre que cela dépend des caractéristiques de l'instrument d'observation du satellite 30 considéré et de son orbite.

Par exemple, dans le cas d'un mode d'acquisition de type « step and stare », une zone élémentaire peut correspondre à une empreinte au sol de l'instrument d'observation. Dans le cas d'un mode d'acquisition de type « push-broom », une zone élémentaire correspond par exemple à une bande dont la largeur correspond à la fauchée de l'instrument d'observation et dont la longueur est égale ou inférieure à une longueur maximale pouvant être acquise en une seule passe par ledit instrument d'observation.

Par exemple, il est possible, pour chaque constellation considérée, de déterminer préalablement un maillage global de la Terre en zones élémentaires, indépendamment des zones géographiques qui devront ultérieurement être observées. L'étape S10 de décomposition peut alors consister, pour une constellation de satellites 30, à identifier dans le maillage global prédéterminé les zones élémentaires qui ont une intersection non vide avec la zone géographique à imager (c'est-à-dire que la zone géographique à imager se trouve entièrement dans la réunion de ces zones élémentaires). La partie a) de la figure 2 représente schématiquement un exemple de décomposition d'une zone géographique ZG en considérant des zones élémentaires ZE-C1 d'une première constellation et des zones élémentaires ZE-C2 d'une seconde constellation, les zones élémentaires ZE-C1 et ZE-C2 étant réparties selon des maillages globaux respectifs. Tel qu'illustré par la partie a) de la figure 2, la décomposition dépend de la forme et des dimensions des zones élémentaires ZE-C1, ZE-CE2. La décomposition aboutit à un nombre de zones élémentaires plus faible avec la première constellation qu'avec la seconde constellation, cependant la surface utile imagée (c'est-à-dire dans ce cas le rapport entre la surface de la zone géographique et la surface de la réunion des zones élémentaires permettant d'imager ladite zone géographique) est plus faible avec la première constellation qu'avec la seconde constellation.

Suivant un autre exemple, il est possible de réaliser une décomposition selon un maillage local dépendant de la zone géographique à imager. Ainsi, dans ce cas, le maillage est local et peut être optimisé pour la zone géographique à imager, par exemple en minimisant le nombre de zones élémentaires. La partie b) de la figure 2 représente schématiquement la décomposition de la zone géographique ZG représentée sur la partie a), en considérant un maillage local. Tel qu'illustré par la partie b) de la figure 2, le nombre de zones élémentaires ZE-C1 pour la première constellation a été fortement réduit (et donc la surface utile fortement augmentée). Il est à noter que, sur la partie b) de la figure 2, seules des translations ont été appliquées pour les zones élémentaires par rapport à la partie a) de la figure 2. Rien n'exclut cependant, suivant d'autres exemples d'utilisation d'un maillage local, de faire varier également l'orientation des zones élémentaires d'une zone géographique à une autre. Par exemple, dans le cas d'un mode d'acquisition de type « push-broom », les zones élémentaires correspondent à des bandes de largeur fixe mais dont la longueur peut varier (jusqu'à une longueur maximale). Dans un tel cas, il peut être avantageux d'orienter les zones élémentaires (bandes) parallèlement à la direction suivant laquelle la zone géographique est la plus longue.

De manière générale, l'utilisation d'un maillage local pour la décomposition permet, pour une constellation donnée, de minimiser le nombre de zones élémentaires par zone géographique, et donc de maximiser la surface utile. L'utilisation d'un maillage global pour la décomposition permet toutefois de faciliter la décomposition (puisque le maillage global en zones élémentaires est connu a priori), et permet en outre de mutualiser des acquisitions pour des requêtes d'observations pour des zones géographiques différentes mais présentant un recouvrement non nul. En effet, dans un tel cas, les zones élémentaires correspondant au recouvrement entre ces zones géographiques pourront être acquises une seule fois pour répondre à ces requêtes d'observation.

Dans des modes préférés de mise en œuvre, les zones élémentaires d'une même observation à réaliser sont allouées à des satellites 30 d'une même constellation. En d'autres termes, dans de tels modes de mise en œuvre, l'observation d'une zone géographique est réalisée uniquement avec des instruments d'observation ayant des caractéristiques similaires et étant embarqués dans des satellites sur des orbites ayant des caractéristiques similaires. De telles dispositions permettent de simplifier l'allocation des requêtes d'observations. L'allocation d'une requête d'observation à une constellation plutôt qu'à une autre peut être imposée par exemple par l'utilisateur lui-même ou par d'autres critères. Par exemple, dans le cas d'une requête d'observation à réaliser avec un radar à synthèse d'ouverture, les constellations de satellites 30 embarquant des instruments d'observation passifs / optiques ne peuvent pas être utilisées. Si deux constellations peuvent être envisagées pour répondre à une même requête d'observation, alors il est par exemple possible d'allouer de manière arbitraire cette requête d'observation à l'une de ces constellations, et de faire en sorte qu'une requête d'observation suivante pouvant être traitée par ces mêmes constellations soit allouée à l'autre constellation, et ainsi de suite. Suivant un autre exemple, si deux constellations peuvent être envisagées pour répondre à une même requête d'observation, alors il est possible d'effectuer deux décompositions de la zone géographique en zones élémentaires, une décomposition pour chaque constellation, et de sélectionner la constellation à utiliser en fonction des deux décompositions. Par exemple, il est possible de sélectionner la constellation dont la décomposition comporte le moins de zones élémentaires, ou encore celle dont la décomposition présente la surface utile la plus importante, etc.

Dans la suite de la description, on se place de manière non-limitative dans le cas où l'acquisition d'une zone géographique est réalisée par une même constellation. On considère en outre de manière non limitative que la constellation qui doit répondre à une requête d'observation est sélectionnée au plus tard à l'issue de l'étape S10 de décomposition.

Tel qu'illustré par la figure 1, le procédé 10 d'allocation comporte en outre, pour chaque zone élémentaire obtenue à l'issue de l'étape S10 de décomposition, une étape S11 de détermination d'au moins une opportunité d'acquisition de la zone élémentaire sur une fenêtre temporelle prédéterminée. La fenêtre temporelle prédéterminée correspond à un horizon temporel sur lequel les requêtes d'observations doivent être allouées. Par exemple, le temps est décomposé en une pluralité de fenêtres temporelles successives, par exemple toutes les 24 heures ou toutes les 48 heures, et la fenêtre temporelle considérée au cours de l'étape S11 de détermination d'opportunités d'acquisition correspond à une fenêtre temporelle non encore débutée, par exemple la prochaine. Sur cette fenêtre temporelle, une opportunité d'acquisition correspond au survol de la zone élémentaire par un satellite 30. En d'autres termes, l'étape S11 de détermination d'opportunités d'acquisition d'une zone élémentaire vise à identifier tous les satellites 30 de la constellation qui vont se retrouver, au cours de la fenêtre temporelle considérée, en situation de réaliser l'acquisition de cette zone élémentaire. A ce stade, seules des considérations d'ordre géométrique sont prises en compte et une opportunité d'acquisition correspond simplement à une indication selon laquelle le satellite 30 correspondant va passer au cours de la fenêtre temporelle suffisamment près de la zone élémentaire pour en réaliser l'acquisition, indépendamment de toute considération de charge des ressources dudit satellite. Par exemple, une opportunité d'acquisition comporte un instant de début (instant le plus tôt auquel l'acquisition par ce satellite 30 peut débuter) et un instant de fin (instant le plus tardif auquel l'acquisition par ce satellite 30 peut se terminer). L'écart entre l'instant de début et l'instant de fin doit en outre être suffisant pour réaliser l'acquisition par l'instrument d'observation du satellite 30 considéré. Suivant les caractéristiques de la constellation de satellites 30, il peut y avoir une ou plusieurs opportunités d'acquisition pour une zone élémentaire sur la fenêtre temporelle considérée.

Tel qu'illustré par la figure 1, le procédé 10 d'allocation comporte ensuite une étape S12 d'allocation provisoire des zones élémentaires à la pluralité de satellites 30, en fonction des opportunités d'acquisition. Au cours de l'étape S12 d'allocation provisoire, le comportement d'un satellite 30 est modélisé au moyen d'un modèle dit préliminaire, qui modélise de manière approximative les manœuvres d'attitude et acquisitions de chaque satellite, sans tenir compte de toutes les contraintes opérationnelles. Un même modèle préliminaire peut être mis en œuvre pour tous les satellites 30 d'une même constellation, et des exemples de modèles préliminaires sont donnés ci-après.

A l'issue de l'étape S12 d'allocation provisoire, toutes les zones élémentaires ont été allouées de manière provisoire aux différents satellites 30. Toutefois, l'utilisation du modèle préliminaire ne permet pas d'assurer que des zones élémentaires allouées de manière provisoire à un satellite 30 pourront effectivement être toutes acquises par ce satellite 30, les contraintes opérationnelles liées aux manœuvres d'attitude et aux acquisitions n'étant modélisées que de manière approximative par ledit modèle préliminaire. Toutefois, la complexité de calcul requise par le modèle préliminaire est limitée et permet donc de d'optimiser de manière globale l'allocation des acquisitions des zones élémentaires aux différents satellites 30.

Après avoir alloué de manière provisoire l'ensemble des zones élémentaires, le procédé 10 d'allocation comporte, pour chaque satellite 30 auquel au moins une acquisition de zone élémentaire a été allouée de manière provisoire, une étape S13 d'évaluation de faisabilité sur la fenêtre temporelle des acquisitions des zones élémentaires allouées de manière provisoire audit satellite 30. Cette évaluation de faisabilité prend en compte toutes les contraintes opérationnelles applicables à chaque satellite 30, au moyen d'un modèle opérationnel qui modélise de manière précise les manœuvres d'attitude et les acquisitions dudit satellite 30.

Il est à noter que, de manière conventionnelle, il est connu de déterminer au sol une séquence exacte de tâches à exécuter par les ressources (instrument d'observation, moyens de manœuvre, etc.) d'un satellite 30 pour réaliser l'acquisition de zones élémentaires prédéterminées. Une telle séquence de tâches à exécuter, également désignée ci-après par « plan de travail », est ensuite transmise au satellite 30 qui l'exécute. Les outils existants utilisés pour générer une telle séquence de tâches à exécuter sont déjà capables de rajouter des tâches à une séquence préalablement déterminée (par exemple pour ajouter une acquisition supplémentaire à réaliser), et de renvoyer un message d'erreur s'il n'est pas possible de rajouter des tâches à une séquence préalablement déterminée. De tels outils (également connus sous le nom d'algorithmes de planification opérationnelle) peuvent donc être utilisés en tant que modèles opérationnels des satellites 30. Dans un tel cas, le modèle opérationnel d'un satellite 30 est donc adapté à générer un plan de travail exécutable par ce satellite 30. Un tel plan de travail (également connu sous le nom de plan de mission) est par exemple converti en une séquence télécommandes datées qui seront transmises au satellite 30 et qui seront exécutées par l'ordinateur à bord (« On-Board Computer » ou OBC) dudit satellite 30 en temps et en heure. Toutefois, il est à noter que ces outils ne sont utilisés ici qu'une seule fois par satellite 30, après avoir alloué de manière provisoire l'ensemble des zones élémentaires, et non à chaque fois qu'il est envisagé d'allouer une nouvelle acquisition à un satellite donné. En outre, l'utilisation du modèle préliminaire lors de l'étape S12 d'allocation provisoire réduit la probabilité d'allouer des acquisitions de zones élémentaires à un satellite 30 qui ne sont pas réalisables par celui-ci.

Tel qu'illustré par la figure 1, chaque zone élémentaire allouée de manière provisoire à un satellite 30 et dont l'acquisition sur la fenêtre temporelle est validée par le modèle opérationnel (référence S13a sur la figure 1) est allouée de manière définitive audit satellite 30, au cours d'une étape S14. En outre, s'il s'avère que l'acquisition d'une zone élémentaire allouée de manière provisoire à un satellite 30 n'est pas validée par le modèle opérationnel (référence S13b sur la figure 1), alors cette zone élémentaire peut être conservée pour une allocation ultérieure à l'un des satellites 30 lors d'une exécution ultérieure de l'étape S11 de détermination d'opportunité d'acquisition et/ou de l'étape S12 d'allocation provisoire, pour la même fenêtre temporelle ou une fenêtre temporelle suivante.

Par exemple, les zones élémentaires à allouer sont mémorisées dans une base de données 63 et, après l'allocation provisoire de chaque zone élémentaire, lorsque l'acquisition d'une zone élémentaire allouée de manière provisoire à un satellite 30 n'est pas validée selon le modèle opérationnel dudit satellite 30 (référence S13b sur la figure 1), ladite zone élémentaire est maintenue dans la base de données 63 en tant que zone élémentaire à allouer, tandis qu'elle peut être supprimée de ladite base de données 63 (ou maintenue dans ladite base de données 63 en tant que zone élémentaire allouée) après validation selon le modèle opérationnel dudit satellite (référence S13a sur la figure 1).

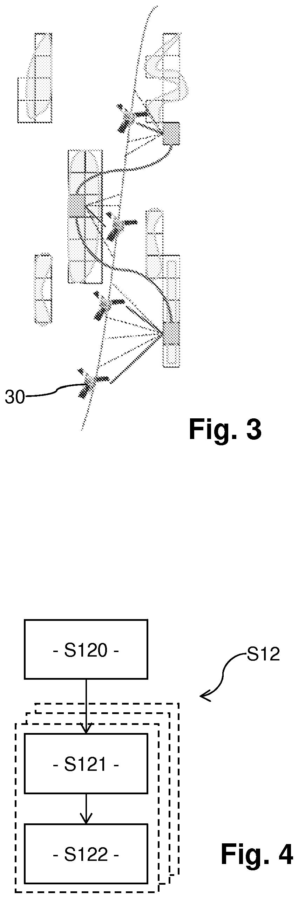

La figure 3 représente schématiquement un satellite 30 en orbite, qui réalise successivement l'acquisition de zones élémentaires appartenant respectivement à des zones géographiques différentes. Pour chaque zone géographique, les zones élémentaires peuvent donc être acquises par des satellites 30 différents, et la prise en compte de l'ensemble des satellites et de l'ensemble des zones élémentaires lors de l'allocation provisoire permet d'optimiser le traitement des requêtes d'observation.

La figure 4 représente schématiquement un exemple préféré de mise en œuvre de l'étape S12 d'allocation provisoire.

Tel qu'illustré par la figure 4, après avoir déterminé l'ensemble des opportunités d'acquisition pour l'ensemble des zones élémentaires à acquérir au cours de la fenêtre temporelle considérée, l'étape S12 d'allocation provisoire comporte tout d'abord une étape S120 d'ordonnancement des zones élémentaires à allouer en fonction d'au moins un paramètre d'ordonnancement prédéterminé. L'étape S120 d'ordonnancement vise à établir un ordre d'ordonnancement de l'ensemble des zones élémentaires qui sera ensuite utilisé pour allouer successivement les zones élémentaires aux satellites 30.

L'ordonnancement des zones élémentaires peut prendre en compte un ou plusieurs paramètres d'ordonnancement. Par exemple, l'ordonnancement peut être réalisé en considérant au moins un paramètre d'ordonnancement parmi les paramètres suivants :

- une priorité de la requête de l'observation associée à ladite zone élémentaire, afin par exemple de privilégier (traiter en premier) les zones élémentaires ayant une priorité élevée,
- des conditions météorologiques (par exemple en termes de pourcentage de ciel clair, en termes de niveau d'ensoleillement, etc.) prévues pour la fenêtre temporelle (par exemple en moyenne sur ladite fenêtre temporelle, ou bien les meilleures ou les moins bonnes conditions météorologiques prévues au cours de ladite fenêtre temporelle, etc.) dans ladite zone élémentaire, afin par exemple de privilégier les zones élémentaires présentant des conditions météorologiques prévues favorables sur ladite fenêtre temporelle par rapport à des zones élémentaires présentant des conditions météorologiques prévues défavorables,
- des conditions météorologiques requises (par l'utilisateur) pour l'acquisition de ladite zone élémentaire, afin par exemple de privilégier les zones élémentaires pour lesquelles les conditions météorologiques prévues pour la fenêtre temporelle sont compatibles avec les conditions météorologiques requises par l'utilisateur par rapport à des zones élémentaires pour lesquelles ce n'est pas le cas,
- une surface utile de la zone élémentaire (ici : l'intersection entre la zone élémentaire et la zone géographique à observer), par exemple en km$^2$ ou en % de la zone élémentaire, afin par exemple de privilégier les zones élémentaires ayant une surface utile élevée,
- une date de péremption d'une requête de l'observation associée à ladite zone élémentaire, afin par exemple de privilégier les zones élémentaires dont les requêtes d'observations expirent le plus tôt,
- une date de réception d'une requête de l'observation associée à ladite zone élémentaire, afin par exemple de privilégier les zones élémentaires dont les requêtes d'observations sont les plus anciennes,
- une fréquence ou un nombre d'acquisitions de la zone géographique de la requête d'observation, afin par exemple de privilégier les zones élémentaires devant être acquises le plus grand nombre de fois, etc.

Dans le cas où plusieurs paramètres d'ordonnancement sont considérés parmi les paramètres précédents, ceux-ci sont de préférence considérés successivement suivant l'ordre donné ci-dessus (en commençant par la priorité, puis les conditions météorologiques, puis la surface utile, etc.). Ainsi, si les zones élémentaires sont ordonnancées en fonction de la priorité, de la surface utile et de la date de péremption, alors il est possible :

- d'ordonnancer d'abord les zones élémentaires en fonction de leurs priorités respectives,
- puis d'ordonnancer les zones élémentaires ayant la même priorité en fonction de leurs surfaces utiles respectives,
- puis d'ordonnancer les zones élémentaires ayant la même priorité et la même surface utile en fonction de leurs dates de péremption respectives.

Il est également possible de calculer un score pour chaque zone élémentaire, en fonction de plusieurs paramètres d'ordonnancement parmi les paramètres précédents. Le cas échéant, il est possible d'appliquer des facteurs de pondérations aux différents paramètres d'ordonnancement, par exemple décroissants suivant l'ordre donné ci-dessus. Ainsi, si les zones élémentaires sont ordonnancées en fonction de la priorité, de la surface utile et de la date de péremption, alors il est possible lors du calcul du score d'appliquer un facteur de pondération plus important pour la priorité, un facteur de pondération plus faible pour la surface utile que pour la priorité, et un facteur de pondération plus faible pour la date de péremption que pour la surface utile.

Tel qu'illustré par la figure 4, les zones élémentaires sont ensuite traitées successivement selon l'ordre d'ordonnancement, c'est-à-dire à partir de la zone élémentaire considérée comme la plus importante d'après le ou les paramètres d'ordonnancement, jusqu'à la zone élémentaire considérée la moins importante. Le traitement de chaque zone élémentaire comporte alors :

- une étape S121 de classement des opportunités d'acquisition de la zone élémentaire traitée en fonction d'au moins un paramètre de classement prédéterminé et,
- une étape S122 d'attribution de la zone élémentaire traitée à un satellite 30 en fonction de l'ordre de classement des opportunités d'acquisition et du modèle préliminaire.

L'étape S121 de classement vise à établir un ordre de classement de l'ensemble des opportunités d'acquisition disponibles pour la zone élémentaire traitée. Ensuite, l'étape S122 d'attribution de la zone élémentaire traitée vise à déterminer le satellite 30 auquel cette zone élémentaire va être allouée de manière provisoire. En pratique, au cours de l'étape S122 d'attribution, les opportunités de classement sont traitées selon l'ordre de classement, c'est-à-dire à partir de l'opportunité d'acquisition considérée comme la meilleure selon le ou les paramètres de classement, jusqu'à l'opportunité d'acquisition considérée comme la moins bonne. Le traitement d'une opportunité d'acquisition au cours de l'étape S122 d'attribution vise à vérifier si le satellite 30 correspondant peut, d'après son modèle préliminaire et d'après les zones élémentaires précédemment allouées de manière provisoire à ce satellite 30, réaliser l'acquisition de la zone élémentaire traitée. En effet, le modèle préliminaire permet par exemple d'estimer un plan de charge des ressources (instrument d'observation, moyens de manœuvre, etc.) du satellite 30 sur la fenêtre temporelle. Ainsi, en tenant compte du plan de charge estimé du satellite 30 pour réaliser l'acquisition des zones élémentaires précédemment allouées de manière provisoire, le modèle préliminaire permet d'évaluer si l'augmentation de charge induit par l'ajout de la zone élémentaire traitée est acceptable ou non. Si le satellite 30 correspondant à l'opportunité d'acquisition traitée peut réaliser l'acquisition de la zone élémentaire traitée, celle-ci lui est allouée de manière provisoire. Dans le cas contraire, l'étape S122 d'attribution traite l'opportunité d'acquisition suivante selon l'ordre de classement, et ainsi de suite.

Le classement des opportunités d'acquisition peut prendre en compte un ou plusieurs paramètres de classement. Par exemple, le classement peut être réalisé en considérant au moins un paramètre de classement parmi les paramètres suivants :

- des conditions météorologiques prévues pour l'opportunité d'acquisition, afin par exemple de privilégier (traiter en premier) les opportunités d'acquisition présentant les conditions météorologiques prévues les plus favorables, ou celles compatibles avec les conditions météorologiques requises par l'utilisateur pour la requête d'observation associée à la zone élémentaire traitée,
- une date de début de l'opportunité d'acquisition, afin par exemple de privilégier les opportunités d'acquisition permettant de réaliser l'acquisition au plus tôt,
- une date de récupération d'une image acquise au cours de l'opportunité d'acquisition (c'est-à-dire la date à laquelle l'image peut être transmise à une station sol par le satellite 30), afin par exemple de privilégier les opportunités d'acquisition permettant de récupérer l'image correspondante le plus rapidement,
- un paramètre de pointage du satellite 30 lors de l'opportunité d'acquisition, afin par exemple de privilégier les opportunités d'acquisition permettant d'observer la zone élémentaire traitée avec un pointage Nadir plutôt qu'avec un pointage oblique.

Comme précédemment pour les paramètres d'ordonnancement, si plusieurs paramètres de classement sont considérés parmi les paramètres précédents, ceux-ci sont de préférence considérés successivement suivant l'ordre donné ci-dessus (en commençant par les conditions météorologiques, puis la date de début, puis la date de récupération, etc.). Il est également possible, suivant d'autres exemples, de calculer un score pour chaque opportunité d'acquisition en fonction de plusieurs paramètres de classement parmi les paramètres précédents, par exemple en appliquant des facteurs de pondération décroissants suivant l'ordre donné ci-dessus.

Par conséquent, dans l'exemple illustré par la figure 4, les zones élémentaires sont traitées selon l'ordre d'ordonnancement. Pour chaque zone élémentaire traitée, les opportunités d'acquisition sont évaluées selon l'ordre de classement, au moyen du modèle préliminaire du satellite 30 concerné. Ainsi, pour une zone élémentaire traitée l'opportunité d'acquisition apparaissant en premier dans l'ordre de classement est évaluée en premier, et le modèle préliminaire du satellite 30 est utilisé pour vérifier si l'augmentation de charge induite par la réalisation de cette opportunité d'acquisition est acceptable. Si c'est le cas, la zone élémentaire traitée est allouée de manière provisoire à ce satellite 30. Dans le cas d'une zone élémentaire traitée devant être acquise plusieurs fois sur la fenêtre temporelle, ceci est répété jusqu'à avoir alloué de manière provisoire ladite zone élémentaire traitée suffisamment de fois pour réaliser le nombre d'acquisitions demandé. Lorsque l'allocation provisoire de la zone élémentaire traitée est achevée, la zone élémentaire suivante selon l'ordre d'ordonnancement peut être traitée. Si ce n'est pas le cas, l'opportunité d'acquisition suivante selon l'ordre de classement est évaluée, et ainsi de suite jusqu'à identifier une opportunité d'acquisition qui peut être réalisée par le satellite 30 concerné d'après le modèle préliminaire dudit satellite 30. Si aucune opportunité d'acquisition n'est réalisable par les satellites 30 concernés sur la fenêtre temporelle, alors la zone élémentaire considérée n'est pas allouée et peut être maintenue dans la base de données 63 en tant que zone élémentaire non allouée. Les zones élémentaires sont traitées successivement de la sorte jusqu'à ce que la dernière zone élémentaire dans l'ordre d'ordonnancement soit traitée.

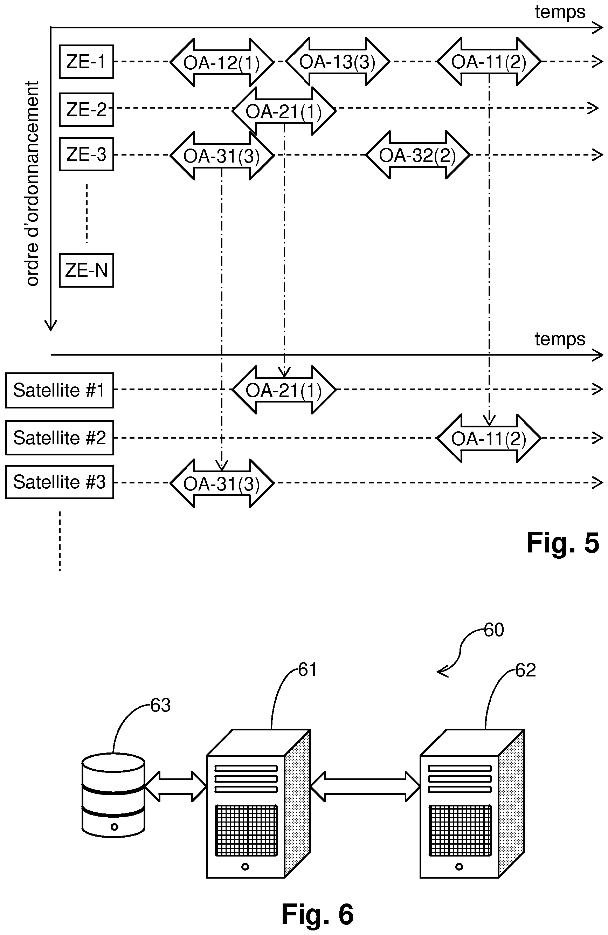

La figure 5 représente schématiquement un exemple de mise en œuvre de l'étape S12 d'allocation provisoire illustrée par la figure 4. La figure 5 représente schématiquement plusieurs zones élémentaires ordonnancées de ZE-1 à ZE-N, la zone élémentaire ZE-1 étant, selon cet ordre d'ordonnancement, la zone élémentaire à traiter en premier, puis la zone élémentaire ZE-2, puis la zone élémentaire ZE-3 et ainsi de suite. Pour chaque zone élémentaire, les opportunités d'acquisition sont représentées en fonction de leurs dates de début, toutefois lesdites opportunités d'acquisition sont dans cet exemple classées selon leurs conditions météorologiques. Sur la figure 5, l'ordre de classement est indiqué explicitement en indiquant le rang de chaque opportunité d'acquisition. En outre, le satellite 30 correspondant à chaque opportunité d'acquisition est également indiqué. Plus particulièrement, la référence « OA-ij(k) » désigne l'opportunité d'acquisition de rang #j pour la zone élémentaire ZE-i, laquelle opportunité d'acquisition étant offerte par le satellite #k. Enfin, les zones élémentaires allouées de manière provisoire à chaque satellite 30 sont indiquées dans la partie inférieure de la figure 5. Dans cet exemple :

- la zone élémentaire ZE-1 est allouée au satellite #2 associé à l'opportunité de rang #1,
- la zone élémentaire ZE-2 est allouée au satellite #1 associé à l'opportunité de rang #1,
- la zone élémentaire ZE-3 est allouée au satellite #3 associé à l'opportunité de rang #1, etc.

Comme on peut le constater, étant donné que les opportunités de classement ont été classées en fonction des conditions météorologiques prévues, les zones élémentaires traitées en premier selon l'ordre d'ordonnancement ne sont pas nécessairement acquises en premier. Dans cet exemple, la zone élémentaire ZE-3 est acquise en premier, puis la zone élémentaire ZE-2 puis la zone élémentaire ZE-1.

Comme indiqué ci-dessus, le modèle préliminaire est utilisé pour vérifier de manière simplifiée si une zone élémentaire peut être allouée de manière provisoire à un satellite 30 donné, compte tenu des zones élémentaires précédemment allouées de manière provisoire à ce satellite 30.

Afin de pouvoir faire cette vérification avec une complexité de calcul limitée, le modèle préliminaire modélise de manière approximative le comportement du satellite 30 (contrairement au modèle opérationnel qui est un modèle précis). Dans des modes préférés de mise en œuvre, le modèle préliminaire est défini par un ensemble de durées prédéfinies associées aux manœuvres d'attitude et/ou aux acquisitions.

Par exemple, dans le modèle préliminaire, les manœuvres d'attitude peuvent être modélisées au moyen d'une durée prédéfinie indépendante de la manœuvre d'attitude à réaliser. Il s'agit par exemple d'une durée moyenne des manœuvres d'attitude réalisées par le satellite 30, ou encore d'une durée maximale des manœuvres d'attitude du satellite 30. Ainsi, il n'est pas tenu compte notamment de l'amplitude réelle, en roulis et en tangage, de la manœuvre d'attitude qui sera nécessaire pour pointer l'instrument d'observation vers la zone élémentaire à acquérir.

Alternativement ou en complément, dans le modèle préliminaire, les acquisitions peuvent être modélisées au moyen d'une durée prédéfinie propre au type d'instrument d'observation. Par exemple, la durée prédéfinie d'acquisition peut être indépendante de la zone élémentaire à acquérir, en particulier dans le cas où la forme et les dimensions sont sensiblement les mêmes pour toutes les zones élémentaires (par exemple dans le cas d'un mode d'acquisition de type « step and stare »). Il s'agit par exemple d'une durée moyenne des acquisitions réalisées par l'instrument d'observation, ou encore d'une durée maximale des acquisitions réalisées par l'instrument d'observation. Alternativement ou en complément, il est possible de prévoir plusieurs durées prédéfinies d'acquisition, par exemple associées à des superficies différentes possibles pour les zones élémentaires. Suivant un autre exemple, lorsque la superficie d'une zone élémentaire peut varier (par exemple dans le cas d'un mode d'acquisition de type « push-broom »), il est possible de prévoir une durée prédéfinie d'acquisition par unité de surface. Dans un tel cas, la zone élémentaire peut être exprimée en unités de surface (par exemple en nombre d'images lignes pour scanner une zone élémentaire correspondant à une bande, si l'unité de surface correspond à une image ligne acquise en mode « push-broom »), et la durée d'acquisition de la zone élémentaire considérée, fournie par le modèle préliminaire, correspond à la durée prédéfinie par unité de surface multipliée par le nombre d'unités de surface que comporte la zone élémentaire.

Alternativement ou en complément, il est possible de prévoir dans le modèle préliminaire plusieurs durées prédéfinies d'acquisition associées respectivement à des valeurs différentes de paramètres d'ordonnancement. Par exemple, il est possible de prévoir une première durée prédéfinie d'acquisition à utiliser pour une zone élémentaire ayant une priorité élevée et une seconde durée prédéfinie d'acquisition à utiliser pour une zone élémentaire ayant une priorité faible, la première durée d'acquisition étant de préférence plus grande que la seconde durée d'acquisition afin de mieux garantir la faisabilité des acquisitions de zones élémentaires ayant des priorités élevées, qui ont alors une marge temporelle plus élevée par rapport aux approximations du modèle préliminaire. De manière plus générale, il est donc possible de prévoir des durées prédéfinies d'acquisition décroissantes avec l'ordre d'ordonnancement, plus élevées pour les zones élémentaires traitées en premier selon l'ordre d'ordonnancement que pour celles traitées en dernier. De manière encore plus générale, le modèle préliminaire peut être configuré pour assurer que l'allocation provisoire d'une zone élémentaire à priorité élevée (ou score élevé) aura une probabilité de validation par le modèle opérationnel plus élevée que l'allocation provisoire d'une zone élémentaire à faible priorité (ou score). Tel qu'indiqué ci-dessus, l'utilisation de plusieurs durées prédéfinies d'acquisition (ou de plusieurs marges temporelles) associées à des valeurs différentes de paramètres d'ordonnancement est une façon de rendre le modèle préliminaire plus ou moins conservatif par rapport au modèle opérationnel.

Le modèle préliminaire est par exemple mis en œuvre pour estimer un plan de charge du satellite 30 qui représente la charge estimée dudit satellite 30 au cours du temps sur la fenêtre temporelle considérée.

On décrit à présent un exemple non limitatif d'utilisation du modèle préliminaire pour évaluer si une zone élémentaire peut être allouée de manière provisoire à un satellite 30. Le plan de charge d'un satellite 30 donné sur la fenêtre temporelle $FT = [t_1, t_2]$ est désigné par $plan(t)$. Le plan de charge $plan(t)$ est initialement mis à zéro :

$$plan(t) = 0 \; \forall t \in FT$$

En outre, les zones élémentaires allouées de manière provisoire au satellite 30 sont ajoutées à un plan d'acquisitions *acq,* qui est initialement vide :

$$acq = [\ ]$$

Afin de vérifier si une opportunité d'acquisition $DTO_1$ d'une zone élémentaire $ZE_1$ peut être réalisée par ce satellite 30, la durée $\overline{\tau_{acq}}(DTO_1)$ nécessaire pour réaliser la manœuvre d'attitude et l'acquisition correspondantes est estimée au moyen du modèle préliminaire, par exemple selon l'expression suivante :

$$\overline{\tau_{acq}}(DTO_1) = \tau_{acq}(ZE_1) + \tau_{man}$$

expression dans laquelle :

- $\tau_{acq}(ZE_1)$ correspond à la durée estimée de l'acquisition par l'instrument d'observation, qui peut dépendre de la zone élémentaire $ZE_1$ à acquérir ; dans la suite de la description, on considère de manière non limitative le cas où la durée prédéfinie d'acquisition est indépendante de la zone élémentaire $\tau_{acq}(ZE_1) = \tau_{acq}$,
- $\tau_{man}$ est la durée prédéfinie pour la manœuvre, considérée comme indépendante de la manœuvre d'attitude à réaliser.

On désigne également par $T(DTO_1)$ la durée de l'opportunité d'acquisition, par exemple égale à la différence entre l'instant le plus tardif auquel l'acquisition peut se terminer et l'instant le plus tôt auquel l'acquisition peut débuter. Evidemment, $T(DTO_1)$ est égale ou supérieure à $\overline{\tau_{acq}}(DTO_1)$. Dans la suite de la description, on considère de manière non limitative que toutes les opportunités d'acquisition ont la même durée $T(DTO_1) = T,$ mais rien n'exclut de considérer des opportunités d'acquisition de durées non toutes identiques. On désigne également par $t^*(DTO_1)$ l'instant au milieu de l'opportunité d'acquisition $DTO_1$, de sorte que l'opportunité d'acquisition débute à un instant $(t^*(DTO_1) - T/2)$ et se termine à un instant $(t^*(DTO_1) + T/2)$. Sur l'opportunité d'acquisition $DTO_1$, l'augmentation de charge induite par l'allocation de la zone élémentaire $ZE_1$ au satellite 30 est par exemple estimée à $\overline{\tau_{acq}}(DTO_1)/T$.

Pour vérifier si le satellite 30 peut réaliser l'acquisition de la zone élémentaire $ZE_1$ lors de l'opportunité d'acquisition $DTO_1$, on calcule le temps moyen disponible $AvTime(DTO_1)$ du satellite 30 sur l'opportunité d'acquisition, par exemple selon l'expression suivante :

$$AvTime(DTO_1) = T - \int_{t^*(DTO_1)-T/2}^{t^*(DTO_1)+T/2} plan(t)\, dt$$

De manière générale, la zone élémentaire $ZE_1$ peut être considérée comme réalisable par le satellite 30 si par exemple $AvTime(DTO_1) > \overline{\tau_{acq}}(DTO_1)$. Si c'est le cas, la zone élémentaire $ZE_1$ peut être allouée de manière provisoire audit satellite 30. Etant donné qu'à ce stade, le plan de charge $plan(t)$ est vide, l'expression $AvTime(DTO_1) > \overline{\tau_{acq}}(DTO_1)$ est vérifiée. La zone élémentaire $ZE_1$ est allouée de manière provisoire au satellite 30 et $acq = [acq; ZE_1]$. Le plan de charge du satellite 30 est en outre augmenté pour tenir compte de l'ajout de la zone élémentaire $ZE_1$ :

$$plan(t) = plan(t) + \frac{\overline{\tau_{acq}}(DTO_1)}{T} \quad \forall t \in [t^*(DTO_1) - T/2; t^*(DTO_1) + T/2]$$

Ensuite, pour évaluer si une opportunité d'acquisition $DTO_2$ d'une zone élémentaire $ZE_2$ peut être réalisée par ce satellite 30, il est possible de calculer la durée $\overline{\tau_{acq}}(DTO_2)$ selon le même principe et de calculer le temps moyen disponible $AvTime(DTO_2)$ selon l'expression suivante :

$$AvTime(DTO_2) = T - \int_{t^*(DTO_2)-T/2}^{t^*(DTO_2)+T/2} plan(t)\, dt$$

Si $AvTime(DTO_2) > \overline{\tau_{acq}}(DTO_2)$, alors la zone élémentaire $ZE_2$ est allouée de manière provisoire au satellite 30 et :

$$acq = [acq;\ ZE_2]$$

$$plan(t) = plan(t) + \frac{\overline{\tau_{acq}}(DTO_2)}{T}\ \forall t \in [t^*(DTO_2) - T/2; t^*(DTO_2) + T/2]$$

Dans le cas contraire, la zone élémentaire $ZE_2$ n'est pas allouée de manière provisoire au satellite 30.

Les mêmes étapes sont répétées à chaque fois qu'il est envisagé d'allouer de manière provisoire une zone élémentaire à ce satellite 30. En outre, les mêmes étapes sont exécutées en parallèle pour les autres satellites 30, chaque satellite 30 disposant de son propre plan de charge $plan(t)$ et de son propre plan d'acquisitions $acq$. Au cours de l'étape S13 d'évaluation de faisabilité au moyen du modèle opérationnel, les zones élémentaires sont traitées selon l'ordre donné par le plan d'acquisitions $acq$, dans lequel les zones élémentaires allouées de manière provisoire sont insérées progressivement selon l'ordre d'ordonnancement.

Le procédé 10 d'allocation est mis en œuvre par un système 60 d'allocation. Le système 60 d'allocation comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en œuvre les différentes étapes du procédé 10 d'allocation. Alternativement ou en complément, le système 60 d'allocation comporte un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie desdites étapes du procédé 10 d'allocation. Ainsi, le système 60 d'allocation comporte des moyens configurés de façon logicielle (produit programme d'ordinateur spécifique) et/ou matérielle (FPGA, PLD, ASIC, composants électroniques discrets, etc.) pour effectuer tout ou partie des étapes du procédé 10 d'allocation des requêtes d'observations.

La figure 6 représente schématiquement un exemple de réalisation d'un système 60 d'allocation. Dans cet exemple non limitatif, la phase d'allocation provisoire (étapes S10 à 12 du procédé 10 d'allocation) et la phase d'allocation définitive (étapes S13 à S14 du procédé 10 d'allocation) sont mises en œuvre par des équipements matériels distincts. En l'occurrence, le système 60 d'allocation comporte dans cet exemple :

- au moins un serveur 61 d'allocation provisoire configuré pour allouer de manière provisoire les zones élémentaires à acquérir, et
- au moins un serveur 62 d'allocation définitive, distinct de l'au moins un serveur d'allocation provisoire, configuré pour allouer de manière définitive les zones élémentaires à acquérir.

Dans l'exemple non limitatif illustré par la figure 6, le système 60 d'allocation comporte un seul serveur 61 d'allocation provisoire et un seul serveur 62 d'allocation définitive. Rien n'exclut cependant, suivant d'autres exemples, d'avoir plusieurs serveurs 61 d'allocation provisoire et/ou plusieurs serveurs 62 d'allocation définitive. Il est d'ailleurs avantageux de prévoir plusieurs serveurs 62 d'allocation définitive, par exemple un serveur 62 d'allocation définitive par satellite 30, afin de garantir plus facilement l'exécution en temps critique de l'allocation définitive.

Un tel mode de réalisation est avantageux notamment dans le cas où des entités différentes réalisent l'allocation provisoire des zones élémentaires et l'allocation définitive. Par exemple, l'entité qui réalise l'allocation provisoire (étapes S10 à 12 du procédé 10 d'allocation) peut être une entité de planification globale n'ayant pas accès aux modèles opérationnels des satellites 30 (et n'opérant aucun desdits satellites 30) mais uniquement à leurs modèles préliminaires. Par exemple, l'entité qui réalise l'allocation définitive (étapes S13 à S14 du procédé 10 d'allocation) peut être un opérateur d'une constellation de satellites 30, qui peut être le seul à disposer du ou des modèles opérationnels de cette constellation de satellites 30. Dans ce cas, le serveur 62 d'allocation définitive de l'opérateur reçoit en entrée des plans d'acquisitions comprenant des zones élémentaires allouées de manière provisoire aux satellites 30 de la constellation qu'il opère. Ensuite, les plans de travail à exécuter pour réaliser les acquisitions des zones élémentaires validées selon le modèle opérationnel sont transmis aux différents satellites 30 de la constellation. Les informations relatives aux zones élémentaires qui ont été allouées de manière définitive et aux zones élémentaires dont les acquisitions n'ont pas été validées par le modèle opérationnel sont par exemple envoyées au serveur 61 d'allocation provisoire, par exemple pour mettre à jour la base de données 63 dans laquelle sont mémorisées les zones élémentaires à allouer.

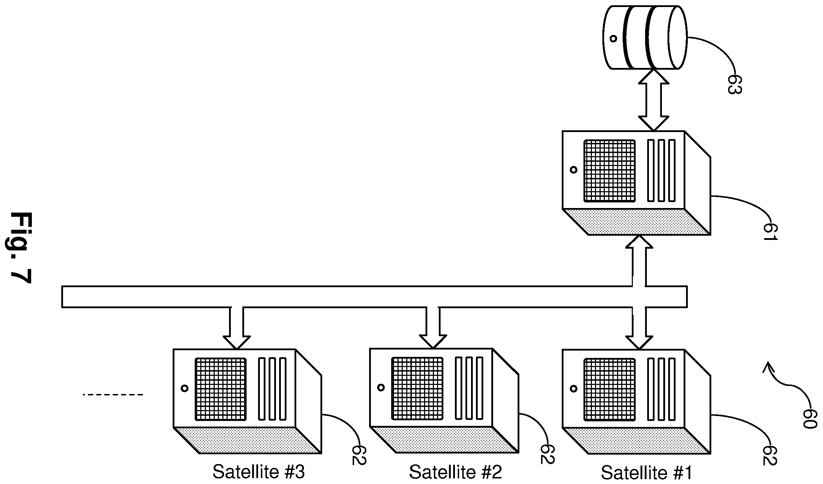

Dans certains cas, et tel qu'illustré par la figure 7, un même serveur 61 d'allocation provisoire peut communiquer avec plusieurs serveurs 62 d'allocation définitive, qui appartiennent par exemple à des opérateurs de constellations différentes de satellites 30. Il est à noter que l'entité qui réalise l'allocation provisoire peut également, dans certains cas, opérer une constellation de satellites 30, de sorte qu'une même entité peut détenir un serveur 61 d'allocation provisoire et un serveur 62 d'allocation définitive associé à cette constellation de satellites 30. Dans un tel cas, le serveur 61 d'allocation provisoire et le serveur 62 d'allocation définitive de cette constellation de satellites 30 peuvent être intégrés dans un même serveur, qui est relié à des serveurs 62 d'allocation définitive distants appartenant à des opérateurs d'autres constellations de satellites 30 non opérées par l'entité qui réalisé l'allocation provisoire des zones élémentaires.

De manière plus générale, le traitement des requêtes d'observations et l'allocation provisoire des zones élémentaires sont de préférence centralisés car cela permet de réaliser l'allocation provisoire de manière plus efficace, en ayant une visibilité globale de l'ensemble des zones élémentaires à acquérir et de l'ensemble des satellites 30 disponibles pour le faire. Toutefois, les satellites 30 peuvent ne pas être tous opérés par un seul et même opérateur, et peuvent être opérés en tout ou partie par une entité distincte de l'entité de planification globale qui réalise le traitement des requêtes d'observations et l'allocation provisoire des zones élémentaires. Ainsi, l'entité de planification globale réalise un filtrage de l'ensemble des zones élémentaires à acquérir en ce qu'un opérateur de constellation de satellites 30 ne reçoit typiquement qu'un sous-ensemble de zones élémentaires correspondant aux zones élémentaires allouées de manière provisoire aux satellites 30 opérés par cet opérateur.

Par exemple, le serveur 61 d'allocation provisoire réalise de manière centralisée l'allocation provisoire des zones élémentaires à une pluralité de satellites 30 pouvant appartenir à différents opérateurs distincts. Cette allocation provisoire se base uniquement sur le modèle préliminaire de chaque satellite 30. Le serveur 61 d'allocation provisoire n'a donc pas besoin d'avoir accès au modèle opérationnel de chaque satellite 30, c'est-à-dire qu'il n'a pas besoin de connaître le modèle opérationnel de chaque satellite 30. Pour chaque satellite 30, le serveur 61 d'allocation provisoire envoie la liste des zones élémentaires allouées de manière provisoire au serveur 62 d'allocation définitive, typiquement distinct du serveur 61 d'allocation provisoire, associé à ce satellite 30 et qui a accès au modèle opérationnel dudit satellite 30. Le serveur 62 d'allocation définitive associé à un satellite 30 peut allouer de manière définitive à ce satellite 30 chaque zone élémentaire allouée de manière provisoire audit satellite 30 dont l'acquisition est validée par le modèle opérationnel de ce satellite 30, par exemple en calculant un plan de travail pour ce satellite 30. Une telle allocation définitive est typiquement réalisée, de manière décentralisée / distribuée, par chaque serveur 62 d'allocation définitive associé à un satellite 30 différent auquel le serveur 61 d'allocation provisoire a alloué de manière provisoire des zones élémentaires à acquérir. Lorsqu'un serveur 62 d'allocation définitive détermine que l'acquisition d'une zone élémentaire, allouée de manière provisoire à un satellite 30 auquel ledit serveur 62 d'allocation définitive, n'est pas validée selon le modèle opérationnel dudit satellite 30, ledit serveur 62 d'allocation définitive peut par exemple informer le serveur 61 d'allocation provisoire que cette zone élémentaire n'a pas pu être allouée de manière définitive. Une telle architecture (allocation provisoire centralisée, par le serveur 61 d'allocation provisoire, et allocation définitive décentralisée, par chaque serveur 62 d'allocation définitive en charge d'un satellite 30 auquel le serveur 61 d'allocation provisoire a alloué de manière provisoire au moins une zone élémentaire à acquérir) est avantageuse en ce qu'elle permet de gérer un grand nombre de satellites 30 et permet en outre d'augmenter facilement le nombre de satellites 30 considérés. Par exemple, si une nouvelle constellation de satellites 30 peut être utilisée pour des acquisitions, il suffit d'ajouter les modèles préliminaires de ces satellites 30 au niveau du serveur 61 d'allocation provisoire, et d'interfacer celui-ci avec le ou les serveurs 62 d'allocation définitive en charge de cette nouvelle constellation de satellites 30 et qui disposent de leurs modèles opérationnels. Dans cette architecture, les modèles préliminaires sont mis en œuvre de manière centralisée et les modèles opérationnels sont mis en œuvre de manière décentralisée et indépendante des modèles préliminaires.

Le système 60 d'allocation peut donc être mis en œuvre dans un système d'acquisition d'images de la Terre (non représenté sur les figures) par une pluralité de satellites 30. Outre le système 60 d'allocation mettant en œuvre le procédé 10 d'allocation, un tel système d'acquisition d'images comporte en outre des moyens de transmission de plans de travail aux satellites 30, le plan de travail d'un satellite permettant de configurer ledit satellite pour réaliser les acquisitions des zones élémentaires allouées de manière définitive audit satellite, et des moyens de réception d'images, acquises par les satellites 30, représentant les zones élémentaires. Les moyens de transmission / réception sont des moyens conventionnels comportant notamment des stations sol adaptées à échanger des données avec des satellites via des liaisons radiofréquences et/ou optiques. Tel qu'indiqué précédemment, les plans de travail sont de préférence établis au moyen des modèles opérationnels des satellites 30.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, l'invention a été décrite en considérant principalement le cas où l'acquisition d'une zone géographique est réalisée par une même constellation. Rien n'exclut cependant, suivant d'autres exemples, de faire réaliser l'acquisition d'une même zone géographique par des constellations différentes de satellites 30. Par exemple il est possible de décomposer la zone géographique en zones intermédiaires, chaque zone intermédiaire pouvant ensuite décomposée en une ou plusieurs zones élémentaires suivant la constellation considérée. Par exemple, il est possible d'établir préalablement un maillage global de la Terre en zones intermédiaires. Les zones intermédiaires peuvent alors être allouées à des constellations différentes, et chaque zone intermédiaire est alors décomposée en zones élémentaires répondant aux caractéristiques de la constellation à laquelle elle est allouée.

En outre, l'invention a été décrite en considérant principalement le cas où la constellation qui doit répondre à une requête d'observation est sélectionnée au plus tard à l'issue de l'étape S10 de décomposition. Toutefois, il est également possible, suivant d'autres exemples de mise en œuvre de l'invention, d'effectuer cette sélection au cours de l'allocation provisoire, ou encore de ne pas effectuer de sélection en autorisant plusieurs constellations de satellites 30 à répondre à une requête d'observation.

Par exemple, en considérant la décomposition ci-dessus en zones intermédiaires, il est également possible de considérer plusieurs constellations pour l'acquisition d'une même zone géographique lors de l'allocation provisoire. Du fait que plusieurs constellations sont considérées, cela génère davantage de zones élémentaires et d'opportunités d'acquisition. Par exemple, dès qu'une zone élémentaire d'une zone intermédiaire est allouée de manière provisoire à une constellation de satellites 30, alors cette zone intermédiaire peut être allouée intégralement à cette constellation de satellites 30. Les zones élémentaires correspondant à la décomposition de cette même zone intermédiaire pour d'autres constellations peuvent alors être supprimées.

De manière similaire, dans le cas où la décomposition d'une zone géographique aboutit à une seule zone élémentaire pour chaque constellation de satellites 30 (zone géographique de dimensions inférieures à celles des zones élémentaires des différentes constellations de satellites 30), alors il est possible de considérer plusieurs constellations pour l'acquisition de cette zone géographique lors de l'allocation provisoire. Dès qu'une zone élémentaire permettant d'acquérir cette zone géographique est allouée de manière provisoire à une constellation de satellites 30, alors les zones élémentaires associées aux autres constellations de satellites 30 peuvent être supprimées.

Suivant un autre exemple, il est possible de décomposer la zone géographique en zones élémentaires pour plusieurs constellations de satellites 30, de sorte à obtenir plusieurs ensembles de zones élémentaires associés respectivement aux différentes constellations. Tous ces ensembles de zones élémentaires peuvent être considérés lors de l'allocation provisoire. Les différentes zones élémentaires (de tous les ensembles) peuvent être ordonnancées en calculant un score pour chaque zone élémentaire qui tient compte de la surface utile de chaque zone élémentaire, et les zones élémentaires sont traitées successivement selon l'ordre d'ordonnancement. Lorsqu'une zone élémentaire de la zone géographique est allouée de manière provisoire, alors les scores des zones élémentaires restant à allouer de manière provisoire sont mis à jour, en mettant à jour leurs surfaces utiles résiduelles. La surface utile résiduelle d'une zone élémentaire correspond à l'intersection entre cette zone élémentaire et la zone géographique résiduelle, et la zone géographique résiduelle correspond à la zone obtenue en retirant de la zone géographique l'intersection avec chaque zone élémentaire déjà allouée de manière provisoire pour cette zone géographique. Ainsi, la surface utile d'une zone élémentaire restant à allouer de manière provisoire va être réduite (et son score modifié) si celle-ci a une intersection non nulle avec l'intersection entre la zone géographique et la zone élémentaire qui vient d'être allouée de manière provisoire. L'ordre d'ordonnancement des zones élémentaires restant à allouer de manière provisoire est alors également mis à jour en fonction de leurs nouveaux scores, et l'allocation provisoire se poursuit pour cette zone géographique. Lorsque toutes les zones élémentaires restant à allouer de manière provisoire pour cette zone géographique ont une surface utile résiduelle nulle (c'est-à-dire lorsque toute la zone géographique a été allouée de manière provisoire), alors elles peuvent être supprimées.

## Revendications

1. Procédé (10) d'allocation de requêtes d'observations de zones géographiques (ZG) à réaliser à une pluralité de satellites (30), ledit procédé comportant des étapes de :

   - (S10) décomposition de chaque zone géographique à observer en une ou plusieurs zones élémentaires à acquérir, chaque zone élémentaire étant adaptée à être acquise par un instrument d'observation d'un des satellites lors d'un survol de ladite zone géographique par ledit satellite,
   - pour chaque zone élémentaire : (S11) détermination d'au moins une opportunité d'acquisition de ladite zone élémentaire correspondant au survol de cette zone élémentaire par au moins un des satellites, sur une fenêtre temporelle prédéterminée,
   - (S12) allocation provisoire des zones élémentaires à la pluralité de satellites, en fonction des opportunités d'acquisition et en fonction d'un modèle préliminaire qui modélise de manière approximative les manœuvres d'attitude et les acquisitions de chaque satellite,

   **caractérisé en ce que** ledit procédé comporte une étape de :

   - pour chaque satellite : (S13) évaluation de faisabilité sur la fenêtre temporelle des acquisitions des zones élémentaires allouées de manière provisoire audit satellite en fonction d'un modèle opérationnel qui modélise de manière précise les manœuvres d'attitude et les acquisitions dudit satellite, et allocation définitive audit satellite de chaque zone élémentaire allouée de manière provisoire audit satellite et dont l'acquisition est validée selon le modèle opérationnel dudit satellite sur la fenêtre temporelle.

2. Procédé (10) selon la revendication 1, dans lequel :

- l'étape (S12) d'allocation provisoire est réalisée par au moins un serveur (61) d'allocation provisoire n'ayant pas accès aux modèles opérationnels de tous les satellites (30), l'au moins un serveur (61) d'allocation provisoire réalisant une allocation globale des zones élémentaires aux satellites (30),
- pour au moins un satellite (30) : l'étape (S13) d'évaluation de faisabilité et l'étape (S14) d'allocation définitive sont réalisées par un serveur (62) d'allocation définitive, distinct de l'au moins un serveur (61) d'allocation provisoire, ayant accès au modèle opérationnel dudit au moins satellite.

3. Procédé (10) selon la revendication 2, dans lequel l'au moins un serveur (61) d'allocation provisoire n'a accès à aucun modèle opérationnel de satellite.

4. Procédé (10) selon la revendication 2 ou 3, dans lequel plusieurs serveurs (62) d'allocation définitive sont mis en œuvre, chaque serveur (62) d'allocation définitive ayant accès aux modèles opérationnels d'une partie seulement des satellites.

5. Procédé (10) selon l'une quelconque des revendications 1 à 4, dans lequel les zones élémentaires à allouer sont mémorisées dans une base de données et, après l'allocation provisoire de chaque zone élémentaire, lorsque l'acquisition d'une zone élémentaire allouée de manière provisoire à un satellite n'est pas validée selon le modèle opérationnel dudit satellite, sur la fenêtre temporelle, ladite zone élémentaire est maintenue dans la base de données en tant que zone élémentaire non allouée.

6. Procédé (10) selon la revendication 5, dans lequel une zone élémentaire maintenue dans la base de données en tant que zone élémentaire non allouée est à nouveau allouée de manière provisoire à un satellite ayant une opportunité d'acquisition sur une fenêtre temporelle ultérieure.

7. Procédé (10) selon l'une quelconque des revendications 1 à 6, dans lequel les satellites appartiennent à une même constellation et une empreinte au sol de l'instrument d'observation est de même forme et de même dimensions pour chaque satellite de la constellation.

8. Procédé (10) selon l'une quelconque des revendications 1 à 6, dans lequel les satellites appartiennent à au moins deux constellations différentes, une empreinte au sol de l'instrument d'observation est de même forme et de même dimensions pour chaque satellite d'une même constellation, les empreintes au sol d'instruments d'observation étant de formes et/ou de dimensions différentes pour des satellites de constellations différentes.

9. Procédé (10) selon la revendication 8, dans lequel les zones élémentaires d'une même observation à réaliser sont allouées à des satellites d'une même constellation.

10. Procédé (10) selon l'une quelconque des revendications 1 à 9, dans lequel le modèle préliminaire modélise les manœuvres d'attitude d'un satellite en fonction d'une durée prédéfinie de manœuvre d'attitude du satellite, indépendante de la manœuvre d'attitude à réaliser pour réaliser l'acquisition.

11. Procédé (10) selon l'une quelconque des revendications 1 à 10, dans lequel le modèle préliminaire modélise les acquisitions d'un satellite en fonction de l'une au moins parmi :

- une durée prédéfinie d'acquisition de l'instrument d'observation du satellite, indépendante de l'acquisition à réaliser,
- une durée prédéfinie d'acquisition de l'instrument d'observation par unité de surface,
- une marge temporelle prédéfinie qui dépend d'une priorité de la requête de l'observation associée à la zone élémentaire.

12. Procédé (10) selon l'une quelconque des revendications 1 à 11, dans lequel le modèle préliminaire est utilisé pour estimer pour chaque satellite un plan de charge de ressources dudit satellite sur la fenêtre temporelle et dans lequel l'allocation provisoire d'une zone élémentaire à un satellite disposant d'une opportunité d'acquisition de ladite zone élémentaire comporte le fait de déterminer, en fonction du modèle préliminaire et en fonction des zones élémentaires déjà allouées de manière provisoire audit satellite, si ladite zone élémentaire à allouer peut être allouée de manière provisoire audit satellite compte tenu du plan de charge estimé dudit satellite sur la fenêtre temporelle.

13. Procédé (10) selon l'une quelconque des revendications 1 à 12, dans lequel l'allocation provisoire comporte, après détermination de l'ensemble des opportunités d'acquisition pour l'ensemble des zones élémentaires :

EP 4 356 069 B1

- un ordonnancement des zones élémentaires à allouer en fonction d'au moins un paramètre d'ordonnancement prédéterminé et,
- un traitement successif des zones élémentaires selon l'ordre d'ordonnancement et, pour chaque zone élémentaire traitée : un classement des opportunités d'acquisition en fonction d'au moins un paramètre de classement prédéterminé et une attribution de la zone élémentaire à un satellite en fonction de l'ordre de classement des opportunités d'acquisition et du modèle préliminaire.

14. Procédé (10) selon la revendication 13, dans lequel l'au moins un paramètre d'ordonnancement des zones élémentaires est au moins l'un parmi les paramètres suivants :

- une priorité de la requête de l'observation associée à ladite zone élémentaire,
- des conditions météorologiques prévues pour la fenêtre temporelle dans la zone élémentaire,
- des conditions météorologiques requises pour l'acquisition de la zone élémentaire,
- une surface utile de la zone élémentaire,
- une date de péremption d'une requête de l'observation associée à ladite zone élémentaire,
- une date de réception d'une requête de l'observation associée à ladite zone élémentaire,
- une fréquence ou un nombre d'acquisitions de la zone géographique de la requête d'observation.

15. Procédé (10) selon l'une quelconque des revendications 13 à 14, dans lequel l'au moins un paramètre de classement des opportunités d'acquisition est au moins l'un parmi les paramètres suivants :

- des conditions météorologiques prévues pour l'opportunité d'acquisition,
- une date de début de l'opportunité d'acquisition,
- une date de récupération d'une image acquise au cours de l'opportunité d'acquisition,
- un paramètre de pointage du satellite lors de l'opportunité d'acquisition,
- un nombre d'autres opportunités d'acquisition vers d'autres zones élémentaires.

16. Procédé (10) selon l'une quelconque des revendications 1 à 15, dans lequel les zones élémentaires allouées de manière définitive à un satellite correspondent à un ensemble de zones élémentaires, parmi les zones élémentaires allouées de manière provisoire audit satellite, pour lesquelles il est possible de calculer, en fonction du modèle opérationnel, un plan de travail exécutable par ledit satellite et permettant de réaliser l'acquisition de toutes les zones élémentaires de l'ensemble lorsque ledit plan de travail est exécuté par ledit satellite.

17. Produit programme d'ordinateur comportant un ensemble d'instructions de code de programme qui, lorsqu'elles sont exécutées par au moins un processeur, configurent ledit au moins un processeur pour mettre en œuvre un procédé (10) d'allocation selon l'une quelconque des revendications 1 à 16.

18. Système (60) d'allocation de requêtes d'observations de zones géographiques (ZG) à réaliser à une pluralité de satellites (30), chaque satellite comportant un instrument d'observation, ledit système allocation comportant des moyens configurés pour mettre en œuvre un procédé (10) d'allocation selon l'une quelconque des revendications 1 à 16.

19. Système (60) d'allocation selon la revendication 18, comportant :

- au moins un serveur d'allocation provisoire configuré pour allouer de manière provisoire les zones élémentaires à acquérir, et
- au moins un serveur d'allocation définitive, distinct de l'au moins un serveur d'allocation provisoire, configuré pour allouer de manière définitive les zones élémentaires à acquérir.

20. Système (60) d'allocation selon la revendication 19, dans lequel l'au moins serveur d'allocation provisoire n'a pas accès aux modèles opérationnels de tous les satellites (30).

21. Système d'acquisition d'images de la Terre par une pluralité de satellites (30), comportant :

- un système (60) d'allocation selon l'une quelconque des revendications 18 à 20,
- des moyens de transmission de plans de travail aux satellites, le plan de travail d'un satellite permettant de configurer ledit satellite pour réaliser les acquisitions des zones élémentaires allouées de manière définitive audit satellite,

- des moyens de réception d'images, acquises par les satellites, représentant les zones élémentaires.

**Patentansprüche**

1. Verfahren (10) zur Zuweisung von durchzuführenden Beobachtungsanfragen von geografischen Zonen (ZG), an eine Mehrzahl von Satelliten (30), wobei das Verfahren die folgenden Schritte umfasst:

   - (S10) Zerlegung jeder zu beobachtenden geografischen Zone in eine oder mehrere zu erfassende Elementarzonen, wobei jede Elementarzone so ausgebildet ist, dass sie von einem Beobachtungsinstrument eines der Satelliten während eines Überflugs der geografischen Zone durch den Satelliten erfasst werden kann,
   - für jede Elementarzone: (S11) Bestimmung wenigstens einer Möglichkeit zur Erfassung der Elementarzone, die dem Überflug dieser Elementarzonen durch wenigstens einen der Satelliten entspricht, in einem vorbestimmten Zeitfenster,
   - (S12) vorläufige Zuweisung der Elementarzonen an die Mehrzahl von Satelliten in Abhängigkeit von den Erfassungsmöglichkeiten und in Abhängigkeit von einem vorläufigen Modell, das die Lagemanöver und die Erfassungen jedes Satelliten näherungsweise modelliert,

   **dadurch gekennzeichnet, dass** das Verfahren den folgenden Schritt umfasst:

   - für jeden Satelliten: (S13) Bewertung der Machbarkeit der Erfassungen der Elementarzonen, die dem Satelliten vorläufig zugewiesen wurden, in Abhängigkeit von einem Betriebsmodell, das die Lagemanöver und die Erfassungen des Satelliten präzise modelliert in dem Zeitfenster, und endgültige Zuweisung jeder Elementarzone, die dem Satelliten vorläufig zugewiesen wurde und deren Erfassung gemäß dem Betriebsmodell des Satelliten in dem Zeitfenster validiert wurde, an den Satelliten.

2. Verfahren (10) nach Anspruch 1, wobei:

   - der Schritt (S12) der vorläufigen Zuweisung von wenigstens einem Server (61) für die vorläufige Zuweisung durchgeführt wird, der keinen Zugriff auf die Betriebsmodelle aller Satelliten (30) hat, wobei der wenigstens eine Server (61) für die vorläufige Zuweisung eine globale Zuweisung der Elementarzonen zu den Satelliten (30) durchführt,
   - wobei für wenigstens einen Satelliten (30) gilt: der Schritt (S13) der Machbarkeitsbewertung und der Schritt (S14) der endgültigen Zuweisung werden von einem Server (62) für die endgültige Zuweisung durchgeführt, der von dem wenigstens einen Server (61) für die vorläufige Zuweisung getrennt ist und Zugriff auf das Betriebsmodell des wenigstens einen Satelliten hat.

3. Verfahren (10) nach Anspruch 2, wobei der wenigstens eine Server (61) für die vorläufige Zuweisung keinen Zugriff auf ein Betriebsmodell des Satelliten hat.

4. Verfahren (10) nach Anspruch 2 oder 3, wobei mehrere Server (62) für die endgültige Zuweisung implementiert werden, wobei jeder Server (62) für die endgültige Zuweisung Zugriff auf die Betriebsmodelle nur eines Teils der Satelliten hat.

5. Verfahren (10) nach einem der Ansprüche 1 bis 4, wobei die zuzuweisenden Elementarzonen in einer Datenbank gespeichert werden und nach der vorläufigen Zuweisung jeder Elementarzone, wenn die Erfassung einer Elementarzone, die einem Satelliten vorläufig zugewiesen wurde, gemäß dem Betriebsmodell des Satelliten in dem Zeitfenster nicht validiert wird, die Elementarzone in der Datenbank als nicht zugewiesene Elementarzone beibehalten wird.

6. Verfahren (10) nach Anspruch 5, wobei eine Elementarzone, die in der Datenbank als nicht zugewiesene Elementarzone beibehalten wird, einem Satelliten mit einer Erfassungsmöglichkeit in einem späteren Zeitfenster erneut vorläufig zugewiesen wird.

7. Verfahren (10) nach einem der Ansprüche 1 bis 6, wobei die Satelliten derselben Konstellation angehören und ein Bodenabdruck des Beobachtungsinstruments für jeden Satelliten der Konstellation die gleiche Form und die gleichen Abmessungen hat.

8. Verfahren (10) nach einem der Ansprüche 1 bis 6, wobei die Satelliten zu wenigstens zwei verschiedenen Konstellationen gehören, ein Bodenabdruck des Beobachtungsinstruments für jeden Satelliten derselben Konstellation dieselbe Form und dieselben Abmessungen aufweist und die Bodenabdrücke der Beobachtungsinstrumente für Satelliten verschiedener Konstellationen unterschiedliche Formen und/oder Abmessungen aufweisen.

9. Verfahren (10) nach Anspruch 8, wobei die Elementarzonen ein und derselben durchzuführenden Beobachtung Satelliten derselben Konstellation zugewiesen werden.

10. Verfahren (10) nach einem der Ansprüche 1 bis 9, wobei das vorläufige Modell die Lagemanöver eines Satelliten in Abhängigkeit von einer vordefinierten Dauer des Lagemanövers des Satelliten modelliert, die unabhängig von dem Lagemanöver ist, das zur Durchführung der Erfassung durchgeführt werden muss.

11. Verfahren (10) nach einem der Ansprüche 1 bis 10, wobei das vorläufige Modell die Erfassungen eines Satelliten in Abhängigkeit von wenigstens einem der folgenden Faktoren modelliert:

   - einer vordefinierten Dauer der Erfassung des Beobachtungsinstruments des Satelliten, die unabhängig von der durchzuführenden Erfassung ist,
   - einer vordefinierten Erfassungsdauer des Beobachtungsinstruments pro Flächeneinheit,
   - einer vordefinierten zeitlichen Marge, die von einer Priorität der Beobachtungsanfrage abhängt, die mit der Elementarzone verbunden ist.

12. Verfahren (10) nach einem der Ansprüche 1 bis 11, wobei das vorläufige Modell verwendet wird, um für jeden Satelliten einen Ressourcenlastplan des Satelliten in dem Zeitfenster zu schätzen, und wobei die vorläufige Zuweisung einer Elementarzone zu einem Satelliten, der über eine Möglichkeit zur Erfassung der Elementarzone verfügt, es umfasst, auf der Grundlage des vorläufigen Modells und auf der Grundlage der dem Satelliten bereits vorläufig zugewiesenen Elementarzone zu bestimmen, ob die zuzuweisende Elementarzone dem Satelliten unter Berücksichtigung des geschätzten Lastplans des Satelliten über das Zeitfenster vorläufig zugewiesen werden kann.

13. Verfahren (10) nach einem der Ansprüche 1 bis 12, wobei die vorläufige Zuweisung nach der Bestimmung der Gesamtheit der Erfassungsmöglichkeiten für die Gesamtheit der Elementarzonen umfasst:

   - eine Reihenfolge der zuzuweisenden Elementarzonen in Abhängigkeit von wenigstens einem vorbestimmten Reihenfolgeparameter und,
   - eine sukzessive Bearbeitung der Elementarzonen gemäß der Reihenfolge der Anordnung und, für jede bearbeitete Elementarzone: eine Klassifizierung der Erfassungsmöglichkeiten in Abhängigkeit von wenigstens einem vorbestimmten Klassifizierungsparameter und eine Zuweisung der Elementarzone zu einem Satelliten in Abhängigkeit von der Klassifizierung der Erfassungsmöglichkeiten und dem vorläufigen Modell.

14. Verfahren (10) nach Anspruch 13, wobei der wenigstens eine Parameter für die Anordnung der Elementarzonen wenigstens einer der folgenden Parameter ist:

   - eine Priorität der Abfrage der Beobachtung, die mit der Elementarzone verbunden ist,
   - Wetterbedingungen, die für das Zeitfenster in der Elementarzone erwartet werden,
   - Wetterbedingungen, die für die Erfassung der Elementarzone erforderlich sind,
   - eine Nutzfläche der Elementarzone,
   - ein Verfallsdatum einer Anfrage der mit der Elementarzone verbundenen Beobachtung,
   - ein Datum des Empfangs einer Anfrage der mit der Elementarzone verbundenen Beobachtung,
   - eine Häufigkeit oder eine Anzahl von Erfassungen der geografischen Zone der Beobachtungsanfrage.

15. Verfahren (10) nach einem der Ansprüche 13 bis 14, wobei der wenigstens eine Parameter zur Klassifizierung der Erfassungsmöglichkeiten wenigstens einer der folgenden Parameter ist:

   - erwartete Wetterbedingungen für die Erfassungsmöglichkeit,
   - ein Datum, an dem die Erfassungsmöglichkeit beginnt,
   - ein Datum, an dem ein während der Erfassungsmöglichkeit aufgenommenes Bild abgerufen wird,
   - einen Parameter für die Ausrichtung des Satelliten während der Erfassungsmöglichkeit,
   - eine Anzahl weiterer Erfassungsmöglichkeiten zu anderen Elementarzonen.

16. Verfahren (10) nach einem der Ansprüche 1 bis 15, wobei die einem Satelliten endgültig zugewiesenen Elementarzonen einer Gruppe von Elementarzonen unter den dem Satelliten vorläufig zugewiesenen Elementarzonen entsprechen, für die es möglich ist, in Abhängigkeit vom Betriebsmodell einen Arbeitsplan zu berechnen, der von dem Satelliten ausgeführt werden kann und es ermöglicht, die Erfassung aller Elementarzonen der Gruppe zu realisieren, wenn der Arbeitsplan von dem Satelliten ausgeführt wird.

17. Computerprogrammprodukt, das einen Satz von Programmcodeanweisungen umfasst, die, wenn sie von wenigstens einem Prozessor ausgeführt werden, den wenigstens einen Prozessor dazu konfigurieren, ein Zuweisungsverfahren (10) nach einem der Ansprüche 1 bis 16 auszuführen.

18. System (60) zur Zuweisung von Beobachtungsanfragen von geografischen Zonen (ZG), die von einer Mehrzahl von Satelliten (30) durchzuführen sind, wobei jeder Satellit ein Beobachtungsinstrument umfasst, wobei das Zuweisungssystem Mittel umfasst, die dazu ausgebildet sind, ein Zuweisungsverfahren (10) nach einem der Ansprüche 1 bis 16 durchzuführen.

19. Zuweisungssystem (60) nach Anspruch 18, umfassend:

- wenigstens einen vorläufigen Zuweisungsserver, der dazu ausgebildet ist, die zu erfassenden Elementarzonen vorläufig zuzuweisen, und
- wenigstens einen endgültigen Zuweisungsserver, der sich von dem wenigstens einen vorläufigen Zuweisungsserver unterscheidet und dazu ausgebildet ist, die zu erfassenden Elementarzonen endgültig zuzuweisen.

20. Zuweisungssystem (60) nach Anspruch 19, wobei der wenigstens eine Server für die vorläufige Zuweisung keinen Zugriff auf die Betriebsmodelle aller Satelliten (30) hat.

21. System zur Erfassung von Bildern der Erde durch eine Mehrzahl von Satelliten (30), umfassend:

- ein Zuweisungssystem (60) nach einem der Ansprüche 18 bis 20,
- Mittel zur Übertragung von Arbeitsplänen an die Satelliten, wobei der Arbeitsplan eines Satelliten es ermöglicht, diesen Satelliten zu konfigurieren, um die Erfassungen der Elementarzonen durchzuführen, die diesem Satelliten endgültig zugewiesen wurden,
- Mittel zum Empfang von Bildern, die von den Satelliten erfasst wurden und die Elementarzonen darstellen.

## Claims

1. A method (10) for allocating requests for observations of geographic areas (ZG) to be carried out to a plurality of satellites (30), said method including steps of:

- (S10) decomposition of each geographic area to be observed into one or more elementary areas to be acquired, each elementary area being adapted to be acquired by an observation instrument of one of the satellites during an overflight of said geographic area by said satellite,
- for each elementary area: (S11) determination of at least one acquisition opportunity of said elementary area corresponding to the overflight of this elementary area by at least one of the satellites, over a predetermined time window,
- (S12) provisional allocation of the elementary areas to the plurality of satellites, depending on the acquisition opportunities and depending on a preliminary model which approximately models the attitude manoeuvres and acquisitions of each satellite,

**characterised in that** said method comprises a step of:

- for each satellite: (S13) evaluation of feasibility over the time window of the acquisitions of the elementary areas provisionally allocated to said satellite depending on an operational model which accurately models the attitude manoeuvres and the acquisitions of said satellite, and definitive allocation to said satellite of each elementary area which is provisionally allocated to said satellite and whose acquisition is validated according to the operational model of said satellite over the time window.

2. The method (10) according to claim 1, wherein:

- the provisional allocation step (S12) is carried out by at least one provisional allocation server (61) not having access to the operational models of all satellites (30), the at least one provisional allocation server (61) carrying out a global allocation of the elementary areas to the satellites (30),
- for at least one satellite (30): the feasibility assessment step (S13) and the definitive allocation step (S14) are carried out by a definitive allocation server (62), distinct from the at least one provisional allocation server (61), having access to the operational model of said at least one satellite.

3. The method (10) according to claim 2, wherein the at least one provisional allocation server (61) does not have access to any satellite operational model.

4. The method (10) according to claim 2 or 3, wherein several definitive allocation servers (62) are implemented, each definitive allocation server (62) having access to the operational models of only a portion of the satellites.

5. The method (10) according to any one of claims 1 to 4, wherein the elementary areas to be allocated are stored in a database and, after the provisional allocation of each elementary area, when the acquisition of an elementary area which is provisionally allocated to a satellite is not validated according to the operational model of said satellite, over the time window, said elementary area is maintained in the database as an unallocated elementary area.

6. The method (10) according to claim 5, wherein an elementary area maintained in the database as an unallocated elementary area is again provisionally allocated to a satellite having an acquisition opportunity over a subsequent time window.

7. The method (10) according to any one of claims 1 to 6, wherein the satellites belong to the same constellation and a footprint of the observation instrument is of the same shape and the same dimensions for each satellite of the constellation.

8. The method (10) according to any one of claims 1 to 6, wherein the satellites belong to at least two different constellations, a footprint of the observation instrument is of the same shape and the same dimensions for each satellite of the same constellation, the footprints of observation instruments being of different shapes and/or dimensions for satellites of different constellations.

9. The method (10) according to claim 8, wherein the elementary areas of the same observation to be carried out are allocated to satellites of the same constellation.

10. The method (10) according to any one of claims 1 to 9, wherein the preliminary model models the attitude manoeuvres of a satellite depending on a predefined duration of attitude manoeuvre of the satellite, independent of the attitude manoeuvre to be carried out in order to perform the acquisition.

11. The method (10) according to any one of claims 1 to 10, wherein the preliminary model models the acquisitions of a satellite depending on at least one of:

- a predefined acquisition duration of the satellite observation instrument, independent of the acquisition to be carried out,
- a predefined acquisition duration of the observation instrument per unit area,
- a predefined time margin which depends on a priority of the request for the observation associated with the elementary area.

12. The method (10) according to any one of claims 1 to 11, wherein the preliminary model is used to estimate for each satellite a resource load plan of said satellite over the time window and wherein the provisional allocation of an elementary area to a satellite having an opportunity to acquire said elementary area includes determining, depending on the preliminary model and depending on the elementary areas which are already provisionally allocated to said satellite, whether said elementary area to be allocated can be provisionally allocated to said satellite taking into account the estimated load plan of said satellite over the time window.

13. The method (10) according to any one of claims 1 to 12, wherein the provisional allocation includes, after determining all acquisition opportunities for all elementary areas:

- a scheduling of the elementary areas to be allocated depending on at least one predetermined ordering parameter and,
- a successive processing of the elementary areas according to the scheduling order and, for each elementary area processed: a classification of the acquisition opportunities depending on at least one predetermined classification parameter and an assignment of the elementary area to a satellite depending on the order of classification of the acquisition opportunities and the preliminary model.

14. The method (10) according to claim 13, wherein the at least one parameter for scheduling the elementary areas is at least one of the following parameters:

- a priority of the request for the observation associated with said elementary area,
- meteorological conditions expected for the time window in the elementary area,
- meteorological conditions required for the acquisition of the elementary area,
- a useful surface area of the elementary area,
- an expiry date of a request for the observation associated with said elementary area,
- a date of receipt of a request for the observation associated with said elementary area,
- a frequency or a number of acquisitions of the geographical area of the observation request.

15. The method (10) according to any one of claims 13 to 14, wherein the at least one parameter for classifying the acquisition opportunities is at least one of the following parameters:

- weather conditions expected for the acquisition opportunity,
- a start date of the acquisition opportunity,
- a date of recovery of an image acquired during the acquisition opportunity,
- a satellite pointing parameter during the acquisition opportunity,
- a number of other acquisition opportunities towards other elementary areas.

16. The method (10) according to any one of claims 1 to 15, wherein the elementary areas which are definitively allocated to a satellite correspond to a set of elementary areas, among the elementary areas which are provisionally allocated to said satellite, for which it is possible to calculate, depending on the operational model, a work plan executable by said satellite and allowing carrying out the acquisition of all elementary areas of the set when said work plan is executed by said satellite.

17. A computer program product including a set of program code instructions which, when executed by at least one processor, configure said at least one processor to implement an allocation method (10) according to any one of claims 1 to 16.

18. A system (60) for allocating requests for observations of geographic areas (ZG) to be carried out to a plurality of satellites (30), each satellite including an observation instrument, said allocation system including means configured to implement an allocation method (10) according to any one of claims 1 to 16.

19. The allocation system (60) according to claim 18, including:

- at least one provisional allocation server configured to provisionally allocate the elementary areas to be acquired, and
- at least one definitive allocation server, distinct from the at least one provisional allocation server, configured to definitively allocate the elementary areas to be acquired.

20. The allocation system (60) according to claim 19, wherein the at least one provisional allocation server does not have access to the operational models of all satellites (30).

21. A system for acquiring Earth images by a plurality of satellites (30), including:

- an allocation system (60) according to any one of claims 18 to 20,
- means for transmitting work plans to the satellites, the work plan of a satellite allowing configuring said satellite to carry out the acquisitions of the elementary areas which are definitively allocated to said satellite,
- means for receiving images, acquired by the satellites, representing the elementary areas.

**Fig. 1**

a)

b)

**Fig. 2**

**Fig. 3**

30

- S120 -

S12

- S121 -

- S122 -

**Fig. 4**

**Fig. 5**

**Fig. 6**

**Fig. 7**

## EP 4 356 069 B1

### RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3375111 A

- FR 3107953 A1

**Littérature non-brevet citée dans la description**

- **ZHIBO, E** ; **SHI, R.** ; **GAN, L** ; **BAOYIN, H** ; **LI, J**. Multi-satellites imaging scheduling using individual reconfiguration based integer coding genetic algorithm. *Acta Astronautica*, 2021, vol. 178, 645-657